# EUROPÄISCHE PATENTSCHRIFT

(11) **EP 3 201 612 B1**
(45) Veröffentlichungstag und Bekanntmachung des Hinweises auf die Patenterteilung: **09.05.2018**
(21) Anmeldenummer: 15778238.4
(22) Anmeldetag: 29.09.2015
(51) Int. Cl.: G01N 23/04

(54) **COMPUTERTOMOGRAPHIE VORRICHTUNG UND DEREN VERWENDUNG**
COMPUTED TOMOGRAPHY DEVICE AND USE THEREOF
APPAREIL DE TOMODENSITOMÉTRIE ET SON UTILISATION

(30) Priorität: 30.09.2014 DE 102014219835
(43) Veröffentlichungstag der Anmeldung: 09.08.2017
(73) Patentinhaber: Fraunhofer-Gesellschaft zur Förderung der angewandten Forschung e.V., 80686 München (DE)
(72) Erfinder: HASSLER, Ulf, 91560 Heilsbronn (DE); HOLUB, Wolfgang, 90766 Fürth (DE)
(74) Vertreter: Stöckeler, Ferdinand
(86) Internationale Anmeldenummer: PCT/EP2015/072429
(87) Internationale Veröffentlichungsnummer: WO 2016/050772

(56) Entgegenhaltungen:
- WO-A2-2005/117708
- WO-A2-2008/141825
- US-B2- 7 020 319
- US-B2- 7 789 562
- U. EWERT ET AL.: "Mobile Computed Tomography for Inspection of Large Stationary Components in Nuclear and Aerospace Industries", MATERIALS TRANSACTIONS, Bd. 53, Nr. 2, 25. Januar 2012 (2012-01-25), Seiten 308-310, XP055236983, Sendai
- W. Holub et al.: "omparative Evaluation of Microscopic Computed Tomography for Macroscopic Objects" In: J. Pas & J. Wildemeersch: "Digital Industrial Radiology and Computed Tomography 22-25 June 2015 Ghent Belgium", 22. Juni 2015 (2015-06-22), Ghent University Belgium, Ghent, XP055236982, das ganze Dokument

## Beschreibung

Die Erfindung betrifft eine Vorrichtung und ein Verfahren zum Erzeugen einer tiefenaufgelösten dreidimensionalen Darstellung von einem Objekt.

Im Rahmen einer zerstörungsfreien Prüfung (ZfP) werden heutzutage häufig Untersuchungen von Objekten unter Verwendung von Röntgencomputertomographie (CT) durchgeführt. Im Fall von sicherheitsrelevanten Bauteilen etwa kann eine vollständige Durchstrahlungsprüfung durch den Gesetzgeber vorgeschrieben sein.

Ein handelsübliches industrielles CT-Untersuchungsgerät weist zumindest eine Röntgenröhre und einen Röntgendetektor auf. Anschließend rotiert das zu untersuchende Objekt zwischen Röhre und Detektor, um Röntgendurchstrahlungsbilder aus verschiedenen Perspektiven aufzunehmen.

Da die einzelnen Komponenten dabei mechanisch fest miteinander verbunden sind und ihre Anordnung zueinander daher bekannt und vorgegeben ist, kann basierend auf diesen Durchstrahlungsbildern mit Hilfe mathematischer Verfahren eine Rekonstruktion der inneren Struktur des Objekts oder der inneren Struktur eines Teils des Objekts erfolgen. Dies geschieht heutzutage üblicherweise durch Algorithmen der gefilterten Rückprojektion.

Darüber hinaus kann eine dreidimensionale Darstellung (eines Teils) des Objekts bestimmt werden, die auch die innere Struktur berücksichtigt. Eine solche Darstellung kann man als "tiefenaufgelöst" bezeichnen.

Bei bekannten Verfahren der industriellen Computertomographie ist die exakte geometrische Konfiguration der Anlage während der Erfassung der Computertomographie-Projektionen von essentieller Bedeutung. Zu diesem Zweck werden Anlagen mit fest vorgegebener geometrischer Konfiguration verwendet. Während der Bildverarbeitung können Kalibrierungsmaßnahmen verwendet werden, um Abweichungen von einer gewünschten Konfiguration zu erfassen und zu berücksichtigen. Verwiesen werden kann hierbei auf die DE 10 2007 023 925 B4; die US 2009/0296893 A1; die US 2003/0081821 A1; die US 2005/0265523 A1; M. Elter, u.a., "Suitability of a new alignment correction method for industrial CT", iCT Conference 2014, www.3dct.at; und Hui Miao u.a., "A phantom-based calibration method for digital x-ray tomosynthesis", J Xray Sci Technol. 2012 January 1, 20(1), 17-29.

U. EWERT ET AL., "Mobile Computed Tomography for Inspection of Large Stationary Components in Nuclear and Aerospace Industries", MATERIALS TRANSACTIONS, Sendai, (20120125), Vol. 53, Nr. 2, Seiten 308 - 310, beschreiben ein mobiles Tomographysystem, bei dem die Position einer Röntgenröhre vor einem Objekt gesteuert wird, wobei hinter dem Objekt ein digitales Detektorarray angeordnet ist.

Die Aufgabe der vorliegenden Erfindung besteht darin, für bestimmte Einsatzbereiche (beispielsweise für mobilen Einsatz und große, flache Bauteile) eine verbesserte Vorrichtung und ein verbessertes Verfahren zum Erzeugen einer tiefenaufgelösten dreidimensionalen Darstellung eines Objekts zu schaffen.

Diese Aufgabe wird durch den Gegenstand der unabhängigen Patentansprüche gelöst.

Ein Ausführungsbeispiel der vorliegenden Erfindung schafft eine Vorrichtung zum Erzeugen einer tiefenaufgelösten dreidimensionalen Darstellung von einem zwischen einer Strahlensendevorrichtung und einer Strahlendetektionsvorrichtung durchstrahlbar angeordneten Objekt, mit folgenden Merkmalen:
einem ersten Teilsystem, das eine Strahlensendevorrichtung aufweist;
einem zweiten Teilsystem, das eine Strahlendetektionsvorrichtung aufweist, die ausgebildet ist, um Durchstrahlungsbilder aufzunehmen,
wobei das erste Teilsystem eine erste Manipulationseinrichtung aufweist, die ausgebildet ist, um die Strahlensendevorrichtung entlang einer ersten Bewegungsbahn zu verfahren, und/oder wobei das zweite Teilsystem eine zweite Manipulationseinrichtung aufweist, die ausgebildet ist, um die Strahlendetektionsvorrichtung entlang einer zweiten Bewegungsbahn zu verfahren, wodurch ein Aufnehmen von Durchstrahlungsbildern von dem Objekt aus verschiedenen Perspektiven ermöglicht wird, wobei das erste Teilsystem und das zweite Teilsystem unabhängig voneinander relativ zu dem Objekt positionierbar sind;
einer Lokalisierungseinrichtung, die ausgebildet ist, um
eine Position und eine Lage der Strahlensendevorrichtung sowie eine Position und eine Lage der Strahlendetektionsvorrichtung zu bestimmen, ohne von der Strahlendetektionsvorrichtung aufgenommene Durchstrahlungsbilder zu verwenden; und
einer Rechenvorrichtung, die ausgebildet ist, um
basierend auf den Durchstrahlungsbildern die tiefenaufgelöste dreidimensionale Darstellung des Objekts zu erzeugen,
wobei die Rechenvorrichtung ausgebildet ist, um die bestimmten Positionen und Lagen bei der Erzeugung der tiefenaufgelösten dreidimensionalen Darstellung des Objekts zu berücksichtigen, und/oder wobei eine Positionierungsvorrichtung vorgesehen ist, die ausgebildet ist, um die Position und Lage der Strahlensendevorrichtung und der Strahlendetektionsvorrichtung relativ zueinander basierend auf den erfassten Positionen und Lagen auf eine für die Erzeugung der tiefenaufgelösten dreidimensionalen Darstellung des Objekts erforderliche Position und Lage einzustellen, und
einer Haltevorrichtung für das erste Teilsystem und einer Haltevorrichtung für das zweite Teilsystem, die jeweils ausgebildet sind, um das jeweilige Teilsystem relativ zu dem Objekt zu positionieren, wobei die Haltevorrichtungen ausgebildet sind, um das erste und zweite Teilsystem an dem Objekt anzubringen.

Die Strahlensendevorrichtung kann beispielsweise eine Röntgenröhre (kurz: Röhre) oder eine Röntgenquelle umfassen und die Strahlendetektionsvorrichtung entsprechend einen Röntgendetektor (kurz: Detektor). Als Detektor kann beispielsweise ein Flachbilddetektor ebenso eingesetzt werden wie etwa eine Aufnahmezeile oder Speicherfolien.

Die Strahlensendevorrichtung und die Strahlendetektionsvorrichtung können als bildgebende (Teil-)Systeme oder auch Komponenten eines bildgebenden Systems (bzw. eines Röntgensystems) bezeichnet werden.

Die Bewegungsbahn kann auch als Trajektoriebahn oder kurz Trajektorie bezeichnet werden.

Die Durchstrahlungsbilder können beispielsweise Röntgenbilder umfassen.

Die Position umfasst dabei beispielsweise einen Ort oder eine Anordnung im Raum, während die Lage eine Ausrichtung oder eine Orientierung im Raum beschreiben kann. Eine Einzelkomponente kann ihre Lage im Raum durch Verdrehung ändern, ohne ihre Position zu ändern und umgekehrt.

Die Lokalisierungseinrichtung weist beispielsweise eine oder mehrere (möglicherweise frei im Raum platzierbare) Stationen auf, welche ein räumliches Bezugssystem schaffen, in welchem bildgebende Teilsysteme (etwa Strahlensendevorrichtung und Strahlendetektionsvorrichtung) in Position und Orientierung lokalisiert werden können.

Die Erzeugung der tiefenaufgelösten Darstellung (oder eine Rekonstruktion der inneren Struktur) des Objekts kann beispielsweise mit Hilfe der heute üblichen mathematischen Verfahren, wie etwa mit Algorithmen der gefilterten Rückprojektion (oder alternativ auch mit Algorithmen der iterativen Bildrekonstruktion) erfolgen.

Ein weiteres Ausführungsbeispiel der vorliegenden Erfindung schafft ein Verfahren zum Erzeugen einer tiefenaufgelösten dreidimensionalen Darstellung von einem zwischen einer Strahlensendevorrichtung eines ersten Teilsystems und einer Strahlendetektionsvorrichtung eines zweiten Teilsystems durchstrahlbar angeordneten Objekt, wobei die Strahlendetektionsvorrichtung ausgebildet ist, um Durchstrahlungsbilder aufzunehmen, und wobei das erste Teilsystem eine erste Manipulationseinrichtung aufweist, die ausgebildet ist, um die Strahlensendevorrichtung entlang einer ersten Bewegungsbahn zu verfahren, und/oder wobei das zweite Teilsystem eine zweite Manipulationseinrichtung aufweist, die ausgebildet ist, um die Strahlendetektionsvorrichtung entlang einer zweiten Bewegungsbahn zu verfahren, wodurch ein Aufnehmen von Durchstrahlungsbildern von dem Objekt aus verschiedenen Perspektiven ermöglicht wird, und wobei das erste Teilsystem und das zweite Teilsystem unabhängig voneinander relativ zu dem Objekt positionierbar sind, mit folgenden Schritten:
Positionieren des ersten Teilsystems und des zweiten Teilsystems relativ zu dem Objekt, um die Strahlensendevorrichtung und die Strahlendetektionsvorrichtung relativ zu dem Objekt zu positionieren, wobei das Positionieren ein Anbringen des ersten und des zweiten Teilsystems an dem Objekt mittels einer Haltevorrichtung für das erste Teilsystem und einer Haltevorrichtung für das zweite Teilsystem aufweist, die jeweils ausgebildet sind, um das erste und zweite Teilsystem an dem Objekt anzubringen;
Bestimmen einer Position und einer Lage der Strahlensendevorrichtung sowie einer Position und einer Lage der Strahlendetektionsvorrichtung relativ zueinander, ohne von der Strahlungsdetektionsvorrichtung aufgenommene Durchstrahlungsbilder zu verwenden;
Aufnehmen von Durchstrahlungsbildern von dem Objekt aus verschiedenen Perspektiven, während die Strahlensendevorrichtung entlang des ersten Bewegungswegs verfahren wird und/oder während die Strahlendetektionsvorrichtung entlang des zweiten Bewegungswegs verfahren wird; und
Erzeugen der tiefenaufgelösten dreidimensionalen Darstellung des Objekts, basierend auf den Durchstrahlungsbildern,
wobei die bestimmten Positionen und Lagen bei der Erzeugung der tiefenaufgelösten dreidimensionalen Darstellung des Objekts berücksichtigt werden und/oder wobei die Position und Lage der Strahlensendevorrichtung und der Strahlendetektionsvorrichtung relativ zueinander basierend auf den erfassten Positionen und Lagen auf eine für die Erzeugung der tiefenaufgelösten dreidimensionalen Darstellung des Objekts erforderliche Position und Lage eingestellt wird.

Der Kerngedanke der vorliegenden Erfindung besteht darin, erkannt zu haben, dass eine Kenntnis über die präzise Anordnung der Komponenten eines Röntgensystems zueinander beispielsweise auch ohne den massiven mechanischen Aufbau, der klassisch die Komponenten eines Röntgensystems in ein gemeinsames, präzises Bezugssystem bringt, erlangt werden kann, indem fehlende Information über die Geometrie des Aufbaus durch Ortsbestimmung unter Verwendung der Lokalisierungseinrichtung wiedergewonnen wird. Dadurch ist es möglich, unabhängig voneinander positionierbare Teilsysteme zu verwenden, die keine präzise mechanische Verbindung zueinander aufweisen. Die Rekonstruktion der dreidimensionalen Darstellung kann dann wie bei herkömmlichen Systemen erfolgen, wobei jedoch statt der bekannten Information über die Geometrie des Aufbaus die durch das Lokalisierungssystem gewonnenen Ortsinformationen bei der Rekonstruktion verwendet werden. Bei diesen Ortsinformationen kann es sich beispielsweise um Positionsvektoren und Richtungsvektoren jeweils für die Strahlensendevorrichtung und für die Strahlendetektionsvorrichtung im dreidimensionalen Raum relativ zu einem Bezugspunkt handeln. Zusätzlich oder alternativ kann auch die relative Position und Lage der Strahlensendevorrichtung und der Strahlenempfangsvorrichtung zueinander basierend auf den gewonnenen Ortsinformationen eingestellt werden.

Die einzelnen Teilsysteme, von denen zumindest eines neben der Strahlensendevorrichtung bzw. der Strahlendetektionsvorrichtung auch eine Manipulationseinrichtung aufweist, können somit unabhängig voneinander relativ zum Objekt positioniert werden.

In anderen Worten kann der mechanische Aufbau des Gesamtsystems derart getrennt sein, dass Röntgenröhre und -Detektor unabhängig voneinander platziert und bewegt werden können, ohne dass die Grundlage für eine mathematische und algorithmische Weiterverarbeitung der erhaltenen Daten verloren geht, da die Position und Lage der Komponenten zueinander bestimmt wird. Somit kann die tiefenaufgelöste Darstellung des Objekts, beispielsweise unter Verwendung von herkömmlichen mathematischen Verfahren, bestimmt werden.

Der erfindungsgemäße Ansatz ermöglicht beispielsweise ein Aufnehmen von Durchstrahlungsbildern des Objekts aus verschiedenen Perspektiven, auch ohne dass das Objekt bewegt oder rotiert werden muss. Das kann beispielsweise für eine Untersuchung (vergleichsweise) schwerer oder großer Objekte vorteilhaft sein, da sehr schwere Objekte häufig (genauso) schwierig hochpräzise zu manipulieren sind wie allgemein große Gegenstände oft nicht ohne weiteres schwingungsfrei bewegt werden können. Weiterhin stellt eine Rotation (deutlich) größerer Objekte häufig eine Herausforderung für das verwendete Manipulationssystem dar. (Diese) Präzision kann jedoch beispielsweise für eine korrekte hochaufgelöste 3D-Rekonstruktion erforderlich sein.

Ebenso erfordert eine Rotation sehr großer Objekte häufig entsprechend große Abstände von Röntgen-Strahlungsquelle zu Detektor. Dies kann bedingen, dass einerseits deutlich weniger Photonenfluss am (Röntgen-)Detektor zur Bildgewinnung zur Verfügung steht und somit die Aufnahmen deutlich länger dauern (ein Abstand der Komponenten des bildgebenden Systems geht quadratisch in eine nötige Belichtungszeit je Bild ein) und dass andererseits eine relative Positionierungsmöglichkeit des Objekts zwischen Röhre und Detektor und somit eine Wahl der passenden Auflösung und darstellbaren Objektregion stark eingeschränkt ist.

Die erfindungsgemäße Vorrichtung kann also (bspw. mittels laminographischer Bildgebung) eine vielversprechende Lösung für diese Prüfbedingungen bieten, da das zu prüfende Objekt möglicherweise in keinem Fall mechanisch aufwändig gelagert oder hochpräzise verschoben oder rotiert werden muss, um ein Aufnehmen von Durchstrahlungsbildern aus verschiedenen Perspektiven zu ermöglichen. Stattdessen können sich die Strahlensendevorrichtung oder die Strahlendetektionsvorrichtung oder beide (zu diesem Zweck) entlang Bewegungsbahnen bzw. auf Trajektorien beiderseits des Objekts bewegen.

Das erfindungsgemäße Verfahren ist möglicherweise eine ideale Prüfmethode besonders für sehr große Objekte, welche u. U. schwer oder gar nicht in den Labors klassischer Computertomographen untersucht werden können.

In anderen Worten löst die vorliegende Erfindung die beschriebenen Unzulänglichkeiten, indem sie einen Apparat und Methoden beschreibt, die es erlauben, die Geometrie des Aufbaus (vor oder bei der eigentlichen Messung) schnell und präzise wiederzugewinnen, indem die Position und Ausrichtung der Anlagenteilsysteme relativ zueinander durch Positionsbestimmungsverfahren unter Verwendung der Lokalisierungseinrichtung ermittelt wird.

Somit können Bedingungen geschaffen werden, die es erlauben, einerseits sehr große Objekte zu untersuchen und andererseits das Aufnahmesystem sehr flexibel und gegebenenfalls sogar ortsveränderlich einzusetzen.

In anderen Worten können mit der vorliegenden Erfindung beispielsweise sich selbst referenzierender Teilsysteme ohne hohe Anforderungen an eine feste Installation eingesetzt werden, möglicherweise anders als mit klassischen hochpräzise kalibrierten Computertomographen.

Gemäß Ausführungsbeispielen ist die Rechenvorrichtung ausgebildet, um eine Position und eine Lage der Strahlensendevorrichtung sowie eine Position und eine Lage der Strahlendetektionsvorrichtung jeweils relativ zu einem Bezugspunkt und somit relativ zueinander zu bestimmen. Bei Ausführungsbeispielen kann auch eine Bestimmung von Position und Lage des Objekts beispielsweise durch eine Oberflächenerfassung stattfinden, wobei die dabei gewonnenen Informationen in einer Komplexitätsreduktion bei der Erzeugung der dreidimensionalen Darstellung des Objekts resultieren können.

Gemäß Ausführungsbeispielen weist der Verlauf der ersten und/oder zweiten Bewegungsbahn einen Kreis mit einem vordefinierten Radius, einen Kreis mit einem variablen Radius oder eine geradlinige Bewegung entlang einer ersten Richtung oder entlang einer zweiten Richtung auf. So kann bspw. ein je nach Anwendungsfall geeigneter oder gewünschter Verlauf der Bewegungsbahn darstellbar sein.

Gemäß Ausführungsbeispielen sind die erste und/oder zweite Manipulationseinrichtung ein Teil des jeweiligen Teilsystems, so dass die Manipulationseinrichtung (und nicht nur die Strahlensendevorrichtung und/oder die Strahlendetektionsvorrichtung unabhängig relativ zu dem jeweils anderen Teilsysteme positionierbar ist. Die erste und/oder zweite Manipulationseinrichtung können bei Ausführungsbeispielen ausgebildet sind, um Strahlensendevorrichtung oder die Strahlendetektionsvorrichtung unabhängig von dieser Positionierbarkeit entlang einer Bewegungsbahn mit einem vorgegebenen Verlauf zu verfahren. Somit können verschiedene Bewegungsbahnen auf mechanisch einfache Art und Weise realisierbar sein. Bei alternativen Ausführungsbeispielen können die erste und/oder zweite Manipulationseinrichtung ausgebildet sein, um den Verlauf der Bewegungsbahn(en) abhängig von den von der Lokalisierungseinrichtung erfassten Positionen und Lagen einzustellen.

Gemäß Ausführungsbeispielen weist die Vorrichtung eine Haltevorrichtung für das erste Teilsystem und eine Haltevorrichtung für das zweite Teilsystem auf, die jeweils ausgebildet sind, um das jeweilige Teilsystem relativ zu dem Objekt zu positionieren. Bei Ausführungsbeispielen sind die Haltevorrichtungen ausgebildet, um die Teilsysteme auf einem Träger zu positionieren, so dass ein zwischen den Teilsystemen auf dem Träger angeordnetes Objekt zwischen der Strahlensendevorrichtung und der Strahlendetektionsvorrichtung angeordnet ist. Bei Ausführungsbeispielen sind die Haltevorrichtungen ausgebildet, um die Teilsysteme an dem Objekt derart anzubringen, dass das Objekt zwischen der Strahlensendevorrichtung und der Strahlendetektionsvorrichtung angeordnet ist. Solche Haltevorrichtung können beispielsweise einfach an eine zu prüfende Region des Objekts angesetzt werden, ohne einen komplizierten mechanischen Aufbau berücksichtigen zu müssen.

Gemäß Ausführungsbeispielen kann die Haltevorrichtung einen Saugnapf, einen Magneten, einen adhäsiven Halter, einen Haken, eine Schraubverbindung oder eine Klebeverbindung aufweisen. Somit kann beispielsweise eine sichere Anbringung der Haltevorrichtung an verschiedenen bzw. verschiedene Material- oder Oberflächeneigenschaften aufweisenden Objekten ermöglicht werden.

Gemäß Ausführungsbeispielen kann die Haltevorrichtung zumindest drei Beine mit einstellbarer Länge aufweisen. Somit kann beispielsweise eine Anbringung an einer unebenen, nicht planen oder allgemein unregelmäßig geformten Oberfläche eines zu prüfenden Objekts ermöglicht, begünstigt oder zumindest vereinfacht werden.

Gemäß Ausführungsbeispielen ist eine Positionierungsvorrichtung vorgesehen, die eine Einstellung von Position und Lage des ersten Teilsystems und des zweiten Teilsystems (und somit auch der Strahlensendevorrichtung und der Strahlendetektionsvorrichtung) relativ zueinander ermöglicht. Diese Positionierungsvorrichtung kann bei Ausführungsbeispielen durch die Haltevorrichtungen für das erste und das zweite Teilsystem implementiert sein, oder kann durch eine Haltevorrichtungspositionierungsvorrichtung für die Haltevorrichtung für das erste Teilsystem und/oder durch eine Haltevorrichtungspositionierungsvorrichtung für die Haltevorrichtung für das zweite Teilsystem implementiert sein. Neben einer erhöhten Flexibilität erlaubt der Einsatz der Positionierungsvorrichtung (etwa ein Roboter- oder Manipulatorsystem) beispielsweise eine (gegebenenfalls automatische) sequentielle Abtastung verschiedener Prüfregionen eines Prüfgegenstandes. Dies kann besonders bei großen Prüfgegenständen Vorteile bieten, welche schwer oder gar nicht in den Labors klassischer Computertomographen untersucht werden können.

Gemäß Ausführungsbeispielen ist die Lokalisierungseinrichtung ausgebildet, um eine funkbasierte Lokalisierung, eine laserbasierte Lokalisierung, eine Lokalisierung basierend auf einer Erfassung optischer Markierungen zu ermöglichen, oder eine kombinierte Anwendung daraus. Somit kann beispielsweise eine präzise Lokalisierung in verschiedenartigen Umgebungen sichergestellt werden, etwa indem bei guten Sichtbedingungen optische Markierungen zum Einsatz kommen oder funkbasierte Techniken verwendet werden. Die Lokalisierungseinrichtung erfasst somit die Positionen und Lagen der Strahlensendevorrichtung und der Strahlendetektionsvorrichtung ohne von der Strahlendetektionsvorrichtung aufgenommene Durchstrahlungsbilder zu verwenden.

Bei Ausführungsbeispielen kann ferner eine Kalibrierungseinrichtung vorgesehen sein, die eine zusätzliche Lokalisierung basierend auf einer Erfassung von Markierungen in Durchstrahlungsbildern ermöglicht. Die Kalibrierungseinrichtung kann ausgebildet sein, um von der Strahlendetektionsvorrichtung aufgenommene Strahlungsbilder zu verwenden, um Abweichungen der Positionen und Lagen der Strahlensendevorrichtung und der Strahlendetektionsvorrichtung von den durch die Lokalisierungseinrichtung bestimmten Positionen und Lagen zu bestimmen, wobei die Rechenvorrichtung ausgebildet ist, um die Abweichungen bei der Erzeugung der tiefenaufgelösten dreidimensionalen Darstellung des Objekts zu berücksichtigen, und/oder wobei die Manipulationseinrichtung ausgebildet ist, um die Position und Lage der Strahlensendevorrichtung und der Strahlendetektionsvorrichtung relativ zueinander basierend auf den Abweichungen einzustellen. Entsprechende Kalibrierungen können bekannten Kalibrierungen entsprechen, wie sie beispielsweise in dem oben genannten Stand der Technik beschrieben sind. Die Kalibrierungseinrichtung kann beispielsweise als Teil der Recheneinrichtung ausgebildet sein.

Gemäß Ausführungsbeispielen kann die Rechenvorrichtung ausgebildet sein, um einen Verlauf für die Bewegungsbahn basierend auf den bestimmten relativen Positionen und Lagen zu bestimmen und diesen der Manipulationseinrichtung bzw. den Manipulationseinrichtungen bereitzustellen.

Gemäß Ausführungsbeispielen kann die Vorrichtung eine Abtastvorrichtung aufweisen, die ausgebildet ist, um eine Oberfläche des Objekts taktil, durch Radar, Ultraschall oder ein optisches Verfahren abzutasten. Diese Abtastung der Oberfläche kann beispielsweise zumindest teilweise die eingeschränkte Tiefeninformation ergänzen, die von Aufnahmen mit einem eingeschränkten Winkelbereich herrühren kann.

Gemäß Ausführungsbeispielen ist die Rechenvorrichtung ausgebildet, um eine Ausgabe der Abtastvorrichtung bei der Erzeugung der tiefenaufgelösten dreidimensionalen Darstellung zu berücksichtigen. Anhand so erzeugter Darstellungen kann beispielsweise auf Art, Position oder Größe von Bestandteilen des Objekts geschlossen werden, auch ohne dass Durchstrahlungsbilder aus einer Trajektorie von mind. 180° um das Objekt vorliegen.

Gemäß Ausführungsbeispielen ist die Rechenvorrichtung ausgebildet, um die Präzision der Lokalisierung durch Verwendung von Durchstrahlungsbildern zu erhöhen.

Gemäß Ausführungsbeispielen ist die Rechenvorrichtung ausgebildet, um eine Auswertung der erzeugten dreidimensionalen Darstellung hinsichtlich eines Defektes oder einer Fehlstelle, durch Vergleich mit gespeicherten Referenzdarstellungen, durchzuführen. Hieraus kann beispielsweise eine Beschleunigung oder Automatisierung eines Prüfverfahrens resultieren.

Gemäß Ausführungsbeispielen sind die Strahlensendevorrichtung und die Strahlendetektionsvorrichtung nicht mechanisch miteinander verbunden. Somit kann beispielsweise ein flexibler oder gegebenenfalls sogar ortsveränderlicher Einsatz ermöglicht werden.

Gemäß Ausführungsbeispielen kann die Vorrichtung ferner einen Bewegungssensor aufweisen, der ausgebildet ist, um Veränderungen der relativen Positionen oder Lagen zu bestimmen, wobei die Rechenvorrichtung ausgelegt ist, um die bestimmten Veränderungen bei der Erzeugung der Darstellung zu berücksichtigen. Die Bestimmung der relativen Positionen und Lagen kann daher beispielsweise vor der eigentlichen Messung oder Untersuchung erfolgen (Kalibrierung).

Bevorzugte Ausführungsbeispiele der vorliegenden Erfindung werden nachfolgend Bezug nehmend auf die beiliegenden Zeichnungen erläutert. Es zeigen:
- Fig. 1: eine beispielhafte Vorrichtung zum Erzeugen einer tiefenaufgelösten dreidimensionalen Darstellung eines Objekts;
- Fig. 2: eine weitere beispielhafte Vorrichtung zum Erzeugen einer tiefenaufgelösten dreidimensionalen Darstellung eines Objekts;
- Figuren 3a-f: verschiedene beispielhafte Manipulationseinrichtungen;
- Fig. 4a: eine schematische Aufsicht einer beispielhaften Haltevorrichtung;
- Fig. 4b: eine schematische perspektivische Ansicht einer beispielhaften Haltevorrichtung;
- Fig. 4c: eine beispielhafte Positionierungsvorrichtung;
- Fig. 5a: eine beispielhafte Lokalisierungseinrichtung in Kombination mit einem Objekt und einer Haltevorrichtung;
- Fig. 5b: eine weitere beispielhafte Lokalisierungseinrichtung in Kombination mit dem Objekt und der Haltevorrichtung aus Fig. 5a; und
- Fig. 6: eine beispielhafte Abtastvorrichtung in Kombination mit einer schematisch dargestellten Rechenvorrichtung und einer schematisch dargestellten Speichervorrichtung.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

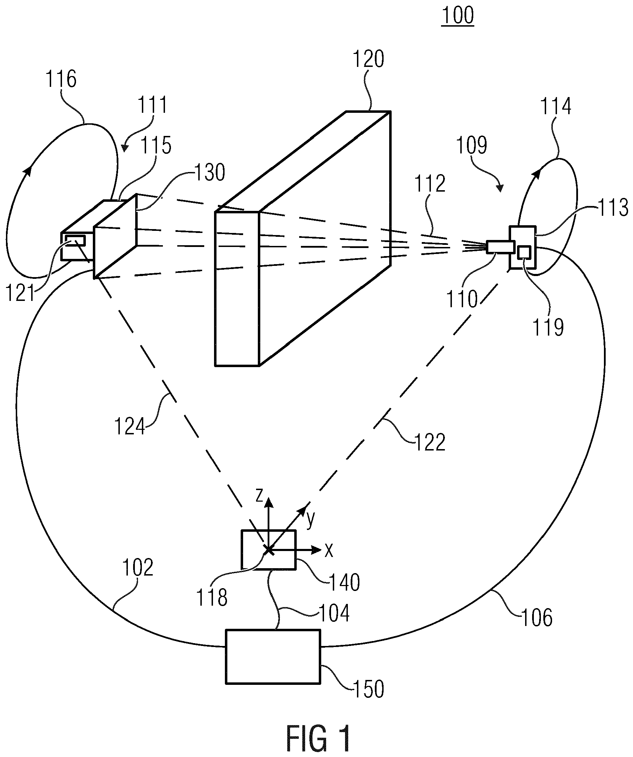

Fig. 1 zeigt eine beispielhafte Vorrichtung 100 zum Erzeugen einer tiefenaufgelösten dreidimensionalen Darstellung eines Objekts.

Die Vorrichtung 100 weist ein schematisch gezeichnetes erstes Teilsystem 109, das eine Strahlensendevorrichtung 110 und eine erste Manipulationseinrichtung 113 aufweist und das in einem rechten Bereich der Fig. 1 angeordnet ist, auf. Die Vorrichtung weist ferner ein zweites Teilsystem 111 auf, das in einem linken Bereich der Fig. 1 angeordnet ist und eine Strahlendetektionsvorrichtung 130, die exemplarisch durch ein perspektivisch gezeichnetes Quadrat dargestellt ist, und eine zweite Manipulationseinrichtung 115 aufweist. Es sei angemerkt, dass bei Ausführungsbeispielen nur entweder die erste oder die zweite Manipulationseinrichtung 113, 115 vorgesehen ist, während bei anderen Ausführungsbeispielen beide Manipulationseinrichtungen vorgesehen sein können. Zwischen der Strahlensendevorrichtung 110 und der Strahlendetektionsvorrichtung 130 durchstrahlbar angeordnet ist ein Objekt 120, exemplarisch durch einen perspektivisch gezeichneten Quader dargestellt.

Die Strahlensendevorrichtung 110 sendet einen Kegelstrahl 112 aus, der durch eine quadratische Pyramide dargestellt wird, wobei die Grundfläche der Pyramide exemplarisch durch die Strahlendetektionsvorrichtung 130 gebildet wird und die Spitze der Pyramide am Ort der Strahlensendevorrichtung 110 liegt.

Der Kegelstrahl 112 tritt zwischen einer ersten, der Strahlensendevorrichtung 110 zugewandten Seite des Objekts 120 und einer zweiten, der Strahlendetektionsvorrichtung 130 zugewandten Seite des Objekts 120 und somit durch das Objekt 120 hindurch. Das Objekt 120 wird mithin durchstrahlt. Die erste Seite und die zweite Seite können dabei flächenmäßig näherungsweise gleich groß sein und jeweils größer als andere Seiten des Objekts 120. Selbstverständlich ist die Erfindung auch auf Objekte anwendbar, die andere Formen aufweisen.

Weiterhin in der Fig. 1 zu sehen ist eine schematische dargestellte Lokalisierungseinrichtung 119, 121, 140. Die Lokalisierungseinrichtung 119, 121, 140 ist ausgelegt, um die Position und die Lage der Strahlensendevorrichtung 110 und die Position und die Lage der Strahlendetektionsvorrichtung 120 zu erfassen. Wie eine solche Lokalisierungseinrichtung im einzelnen aussehen kann, ist für Fachleute offensichtlich. In der Regel wird dazu an dem ersten Teilsystem zumindest ein erstes Merkmal 119 der Lokalisierungseinrichtung angeordnet sein, wird an dem zweiten Teilsystem zumindest ein zweites Merkmal 121 der Lokalisierungseinrichtung angeordnet sein, und wird eine Einheit 140 der Lokalisierungseinrichtung im Raum angeordnet sein. Die Merkmale 119 und 121 können beispielsweise an der ersten Manipulationseinrichtung 113 und der zweiten Manipulationseinrichtung 115 angebracht sein, oder direkt an der Strahlensendevorrichtung 110 bzw. der Strahlendetektionsvorrichtung 130 angebracht sein. Die Merkmale können auch an beliebigen Teilen der ersten und zweiten Teilsysteme angebracht sein, solange eine definierte Positionsbeziehung zwischen dem entsprechenden Teil und der Strahlensendevorrichtung sowie dem entsprechenden Teil und der Strahlendetektionsvorrichtung existiert. Die Merkmale können beispielsweise durch Funksender oder optische Merkmale implementiert sein. Es können auch mehrere entsprechende Merkmale an dem ersten und/oder zweiten Teilsystem angebracht sein, um die Erfassung der Lage der Strahlensendevorrichtung und der Strahlenempfangsvorrichtung zu unterstützen. Ein Merkmal der Lokalisierungseinrichtung kann auch an dem Objekt angeordnet sein, um die Erfassung von Position und Lage des Objekts zu ermöglichen.

Die Strahlensendevorrichtung 110, die Strahlendetektionsvorrichtung 130 und die Lokalisierungseinrichtungseinheit 140 sind weiterhin veranschaulichend mit einer schematisch dargestellten Rechenvorrichtung 150 gekoppelt, wie es durch Linien 102, 104 und 106 angedeutet ist.

Die erste Manipulationseinrichtung 113 ist ausgebildet, um die Strahlensendevorrichtung 110 entlang einer Bewegungsbahn 114 zu verfahren, deren Verlauf exemplarisch in einer Ebene angeordnet ist, die zu der ersten oder zweiten Seite des Objekts 120 oder zu einer Ebene von Interesse im Objekt näherungsweise parallel ist. Die Bewegungsbahn 114 ist hierbei exemplarisch durch einen Kreis mit einem vordefinierten Radius dargestellt. Die Strahlensendevorrichtung 110 könnte sich entlang dieser Kreisbahn beispielsweise im Uhrzeigersinn bewegen, wie es durch die Richtung des Pfeiles auf der Bewegungsbahn 114 angedeutet ist.

Die zweite Manipulationseinrichtung 115 ist ausgebildet, um die Strahlendetektionsvorrichtung 130 entlang einer Bewegungsbahn 116 zu verfahren, deren Verlauf exemplarisch in einer Ebene angeordnet ist, die zu der ersten oder zweiten Seite des Objekts 120 oder zu einer Ebene von Interesse im Objekt näherungsweise parallel ist. Die Bewegungsbahn 116 ist ebenfalls durch einen Kreis mit einem vordefinierten Radius dargestellt. Die Bewegung könnte beispielsweise im Uhrzeigersinn erfolgen, wie es durch die Richtung des Pfeiles der Bewegungsbahn 116 angedeutet ist.

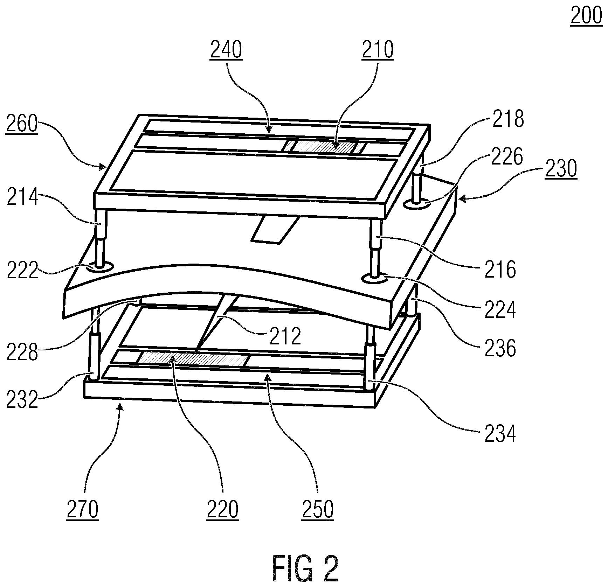

Bei der gezeigten Konfiguration sind die erste Seite und die zweite Seite des Objekts 120 und mithin die Ebenen, in denen die Bewegungsbahnen 114 bzw. 116 liegen, näherungsweise parallel. Dies ist lediglich aus Gründen der Anschaulichkeit so dargestellt, in einem konkreten Anwendungsfall könnte das Objekt 120 anders geformt sein, oder die Bewegungsbahnen könnten in verschiedenen Ebenen liegen oder beispielsweise jeweils einen anderen Verlauf aufweisen. Beispielsweise könnte es sich bei der Trajektorie anstelle einer Kreisbahn auch um eine Ellipse, ein Rechteck, ein Gitter oder eine beliebige andere Bahn in der Ebene handeln. Ein entsprechendes Ausführungsbeispiel wird in der Fig. 2 gezeigt.

Ein möglicher Bezugspunkt 118, bezüglich dessen durch die Lokalisierungseinrichtung für die Strahlensendevorrichtung und die Strahlenempfangsvorrichtung jeweils Positionsvektoren und Richtungsvektoren im dreidimensionalen Raum bestimmt werden können, ist in Fig. 1 als Ursprung 118 eines Koordinatensystems angedeutet. Zu diesem Zweck kann die Einheit 140 beispielsweise Signale (optische Signale oder Funksignal) von den Merkmalen 119 und 121 empfangen, wie durch Verbindungslinien 122 und 124 angedeutet ist und wie für Fachleute offensichtlich ist.

Im gezeigten Fall können bspw. zunächst Positionen und Lagen der Strahlensende- und Strahlendetektionsvorrichtung jeweils relativ zu dem Bezugspunkt 118 erfasst werden, um dann basierend auf der so erlangten Information die Position und die Lage jeweils der Strahlensendevorrichtung 110 und der Strahlendetektionsvorrichtung 130 relativ zueinander zu bestimmen.

Gemäß Ausführungsbeispielen kann auch der Ort der Strahlensendevorrichtung 110 oder der Ort der Strahlendetektionsvorrichtung 130 als Bezugspunkt fungieren. Ebenfalls denkbar ist, dass eine Lokalisierungseinrichtung eine oder mehrere frei im Raum platzierbare Stationen aufweist, welche ein räumliches Bezugssystem schaffen, in welchem die bildgebenden Teilsysteme in Position und Orientierung lokalisiert werden können.

In anderen Worten können bei Ausführungsbeispielen der Erfindung auch ohne den massiven mechanischen Aufbau, der klassisch die Komponenten eines Röntgensystems in ein gemeinsames, präzises Bezugssystem bringt, Bedingungen geschaffen werden, die es erlauben, einerseits sehr große Objekte zu untersuchen und andererseits das Aufnahmesystem sehr flexibel und gegebenenfalls sogar ortsveränderlich einzusetzen. Um dennoch auch dreidimensionale Bilder zu gewinnen, kann die fehlende Information über die Geometrie durch Ortsbestimmung, beispielsweise mittels Funk- oder Laserortung, Kalibrierung und Algorithmik wiedergewonnen werden.

Bei Ausführungsbeispielen kann die Lokalisierungseinrichtung die Positionen und Lagen einmal bestimmen bevor die Strahlensendevorrichtung und/oder die Strahlenempfangsvorrichtung entlang der Bewegungsbahn bewegt werden. Eine Bestimmung während dieser Bewegung ist nicht notwendig, da Positionsänderungen bzw. Lageänderungen während der Bewegung bekannt sind. Bei alternativen Ausführungsbeispielen können entsprechende Positions- und Lage-Bestimmungen auch während der Bewegung durchgeführt und bei der Rekonstruktion berücksichtigt werden.

Die bestimmten Positionen und Lagen können als Lokalisierungsdaten bereitgestellt werden, die an die Rechenvorrichtung übermittelt werden.

Die Lokalisierungsdaten können durch die Rechenvorrichtung bei der Rekonstruktion des dreidimensionalen Bildes verwendet werden. Bei Ausführungsbeispielen können die Lokalisierungsdaten, beispielsweise in Form der Positions- und Richtungs-Vektoren direkt in die Rekonstruktionsstufe eingehen, um aus den Projektionsdaten das 3D-Modell des (zu prüfenden) Objekts zu berechnen. Dies kann insbesondere bei algebraischen Rekonstruktionstechniken (ART) implementiert werden, bei denen keine feste vorgegebene Geometrie vorliegen muss, um eine Rekonstruktion zu ermöglichen.

Bei alternativen Ausführungsbeispielen werden Position und Lage der Strahlensendevorrichtung und der Strahlendetektionsvorrichtung relativ zueinander basierend auf den Lokalisierungsdaten auf eine für die Erzeugung der tiefenaufgelösten dreidimensionalen Darstellung des Objekts erforderliche Position und Lage eingestellt. Dabei kann die Rechenvorrichtung ausgelegt sein, um eine Positionierungsvorrichtung zu steuern, um Position und Lage des ersten und des zweiten Teilsystems relativ zueinander einzustellen, um einer für die verwendete Rekonstruktion erforderlichen Geometrie zu genügen. So können die Strahlensendevorrichtung und die Strahlendetektionsvorrichtung in eine solche Position und Lage relativ zueinander gebracht werden, dass eine Durchleuchtung des Objekts mit den für eine bestimmte Rekonstruktion erforderlichen Winkeln stattfindet, wenn sich Strahlensendevorrichtung und/oder Strahlendetektionsvorrichtung entlang der jeweiligen Bewegungsbahn bewegen.

Bei Ausführungsbeispielen können aus den Lokalisierungsdaten Korrekturwerte berechnet werden, um die Positionierung von Strahlensendevorrichtung und Strahlendetektionsvorrichtung (der beiden Röntgeneinheiten) zu verbessern. Beispielsweise kommen hier eine selektive Höhenverstellung von Beinen einer Halteeinrichtung oder ein Versatz in der Bewegungsebene der Strahlensendevorrichtung und der Strahlendetektionsvorrichtung in Betracht.

Die Strahlendetektionsvorrichtung 130 ist ausgebildet, um Durchstrahlungsbilder des Objekts 120 aus unterschiedlichen Perspektiven aufzunehmen oder zu erfassen. Dies wird beispielsweise durch die Bewegung entweder der Strahlensendevorrichtung 110 entlang der Bewegungsbahn 114 oder der Strahlendetektionsvorrichtung 130 entlang der Bewegungsbahn 116 ermöglicht. Das Objekt 120 muss hierfür nicht bewegt werden.

Es ist denkbar, dass sich entweder nur die Strahlensendevorrichtung 110 oder nur die Strahlendetektionsvorrichtung 130 entlang einer jeweiligen Bewegungsbahn bewegt, oder dass sich beide entlang ihrer jeweiligen Bewegungsbahnen bewegen. Falls sich beide Vorrichtungen bewegen, können sie sich beispielsweise mit einer Phasenverschiebung (von z.B. 180°) mitläufig entlang ihrer Bewegungsbahnen bewegen. Auch eine gegenläufige Bewegung wäre denkbar, was bei der Rekonstruktion entsprechend zu berücksichtigen wäre. Die Bewegung der Strahlensendevorrichtung und/oder der Strahlendetektionsvorrichtung kann kontinuierlich oder schrittweise sein. In der Regel wird die Bewegung eine schrittweise Bewegung sein, wobei die Strahlensendevorrichtung und/oder die Strahlendetektionsvorrichtung nach jedem Schritt angehalten werden und jeweilige Aufnahmen gemacht werden, während sich die Strahlensendevorrichtung und die Strahlendetektionsvorrichtung an jeweiligen diskreten Positionen (im Stillstand) befinden. Alternativ könnte die Bewegung eine kontinuierlich Bewegung sein und die Aufnahmen würden jeweils zu definierten Zeitpunkten gemacht werden.

Die Rechenvorrichtung 150 ist ausgebildet, um anhand der bestimmten relativen Positionen und Lagen (oder der Lokalisierungsdaten) und basierend auf dem Verlauf der Bewegungsbahn 114 oder dem Verlauf der Bewegungsbahn 116 sowie basierend auf von der Strahlendetektionsvorrichtung 130 aus verschiedenen Perspektiven aufgenommenen Durchstrahlungsbildern eine tiefenaufgelöste dreidimensionale Darstellung des Objekts 120 zu erzeugen. Bei einem Ausführungsbeispiel erfolgt die Erzeugung der Darstellung auf der Grundlage der Radontransformation.

In anderen Worten enthält die Aufnahme einer Reihe von Röntgendurchstrahlungsbildern eines Objekts aus verschiedenen Perspektiven dreidimensionale Informationen über die innere Struktur des Objektes. Die Rückgewinnung dieser Informationen erfordert Kenntnis über die präzise Anordnung der Komponenten des Röntgensystems (hier: Strahlensendevorrichtung 110 und Strahlendetektionsvorrichtung 130) zueinander (erfindungsgemäß ist es nicht notwendig, die Anordnung der Komponenten bezüglich des Objekts zu bestimmen).

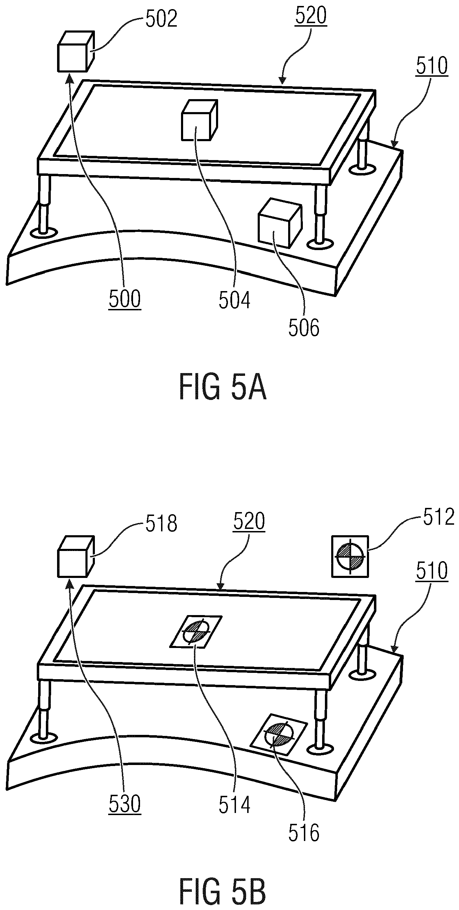

Sowohl im mobilen Einsatz als auch allgemein bei sehr großen Objekten ist es möglich, dass diese Kenntnis nicht einfach wie bisher durch einen mechanischen Aufbau mit bekannter oder vorgegebener Geometrie erzielt werden kann. Daher wird bei Ausführungsbeispielen der Erfindung (fehlende) Information über die Geometrie durch Ortsbestimmung, unter Verwendung der Lokalisierungseinrichtung, wiedergewonnen. Dies kann beispielsweise mittels Funk- oder Laserortung, Kalibrierung oder Algorithmik erfolgen. Entsprechende Ausführungsbeispiele von Lokalisierungseinrichtungen werden in den Figuren 5a und 5b gezeigt und in den zugehörigen Beschreibungen erläutert.

Die Vorrichtung 100 erlaubt es in anderen Worten, die Geometrie des Gesamtaufbaus bei oder vor der eigentlichen Messung oder Untersuchung des Objekts 120 schnell und präzise wiederzugewinnen und mit Hilfe dieser Information ein dreidimensionales Bild des Objekts 120 und dessen innerer Struktur zu rekonstruieren.

Es ist also beispielsweise möglich, den mechanischen Aufbau des Gesamtsystems 100 derart zu trennen, dass Röhre 110 und Detektor 130 ohne mechanische Verbindung voneinander unabhängig platziert und bewegt werden können, ohne dass damit die Information ihrer Position und Orientierung zueinander und damit auch die Grundlage für eine mathematische und algorithmische Weiterverarbeitung der Daten zu einem dreidimensionalen Bild verloren geht.

In anderen Worten erfordert eine Röntgencomputertomographie unter Verwendung der Vorrichtung 100 möglicherweise keinen vollständigen Datensatz von Durchstrahlungsbildern aus einer Trajektorie von mindestens 180° rund um das Objekt 120 (plus Öffnungswinkel des Strahlenkegels 112), um die mathematisch vollständige Information zu erhalten, die für die Rekonstruktion eines volumetrischen dreidimensionalen Bildes erforderlich ist. Die Abbildung des Objekts muss nicht unbedingt auf den Detektor passen. (Heute gängige Flachbilddetektoren bieten Kantenlängen von typischerweise 40 cm, wodurch mit diesen lediglich Objekte mit einem umschließenden Zylinderradius von kleiner als 40 cm ohne sogenannte Trunkierungsartefakte aufgenommen werden können).

Bedingt durch den kleinen (beispielsweise durch die Bewegungsbahnen 114 oder 116 eingeschränkten) Winkelbereich ist es möglich, dass die so erzielten (Durchstrahlungs-) Bilder (solcher Laminographien) beispielsweise dreidimensionale Information über Kanten und Strukturen im Objekt 120 bieten, aber nur eingeschränkte Schlüsse auf Art, Position und Größe von Objektbestandteilen erlauben.

Zur Einschränkung dieser prinzipiellen Schwächen der Durchstrahlungsbilder bzw. (laminographischen) Aufnahmen aus einem begrenzten Winkelbereich sowie zur Unterstützung der 3-D-Rekonstruktion können gemäß einer vorteilhaften Weiterbildung der vorliegenden Erfindung unter Verwendung einer Abtastvorrichtung zusätzlich Oberflächeninformationen des Objekts 120 oder allgemein eines Prüfgegenstands eingebracht werden.

Bei Ausführungsbeispielen erfolgt die Bestimmung der relativen Positionen und Lagen bei oder vor der eigentlichen Untersuchung im Rahmen einer Kalibrierung. Gegebenenfalls kann diese Kalibrierung weiterhin durch die Röntgenbildgebung der Teilsysteme selbst - mit oder ohne Zuhilfenahme eines Kalibrierphantoms - präzisiert werden. Ein Kalibrierphantom kann zu diesem Zwecke an der Position des Objekts 120 durchstrahlbar angeordnet werden. Nach erfolgter Durchstrahlung des Kalibrierphantoms kann, beispielsweise unter Verwendung der Rechenvorrichtung 150, ein Abgleich der aufgenommenen Bilder erfolgen, um eine Genauigkeit der Orts- und Lagebestimmung zu erhöhen. Die Rechenvorrichtung 150 kann also mithin ausgebildet sein, um eine Präzision der Lokalisierung basierend auf den Durchstrahlungsbildern zu erhöhen.

Ebenfalls denkbar ist, dass Änderungen von (relativen) Positionen und Lagen (nach erfolgter Kalibrierung) mit einem oder mehreren Bewegungssensoren verfolgt werden. Ein Bewegungssensor ist dann beispielsweise ausgebildet, um Veränderungen der relativen Positionen und Lagen (der bildgebenden Teilsysteme) zu bestimmen, wobei die Rechenvorrichtung ausgebildet ist, um die bestimmten Veränderungen bei der Erzeugung der Darstellung zu berücksichtigen. In anderen Worten können Bewegungen und Veränderungen (nach einem Kalibrierschritt) beispielsweise durch Trackingsysteme mittels Inertialsensorik kompensiert werden.

Fig. 2 zeigt eine weitere beispielhafte Vorrichtung 200 zum Erzeugen einer tiefenaufgelösten dreidimensionalen Darstellung eines Objekts.

Die Vorrichtung 200 weist eine Strahlendetektionsvorrichtung 210 und eine Strahlensendevorrichtung 220 auf. Diese sind oberhalb (210) und unterhalb (220) eines zu durchstrahlenden Objekts 230 angeordnet und schematisch gezeichnet.

Das perspektivisch gezeichnete Objekt 230 weist exemplarisch eine nach oben (hin zu der Strahlendetektionsvorrichtung 210) gekrümmte Struktur auf, wobei eine erste, der Strahlendetektionsvorrichtung 210 zugewandte Seite und eine zweite, der Strahlensendevorrichtung 220 zugewandte Seite näherungsweise parallele Oberflächen aufweisen können. Das Objekt kann jedoch beliebig geformt sein, wobei eine Anwendung insbesondere für Objekte, deren Dicke geringer ist als deren Breite und Länge, wie z.B. Windmühlenflügel oder Flugzeugflügel, denkbar ist.

Das Objekt 230 wird von einem Kegelstrahl 212, der von der Strahlensendevorrichtung 220 ausgesendet wird und von der Strahlendetektionsvorrichtung 210 empfangen wird, in einem Winkel von ca. 45° zu der von oben nach unten verlaufenden Raumrichtung durchstrahlt. Dabei handelt es sich jedoch lediglich um eine beispielhafte Momentaufnahme; sowohl die Strahlendetektionsvorrichtung 210 als auch die Strahlensendevorrichtung 220 sind entlang einer jeweiligen Bewegungsbahn verfahrbar ausgebildet, wodurch ein Aufnehmen von Durchstrahlungsbildern des Objekts 230 aus verschiedenen Perspektiven ermöglicht wird. Die Verläufe der Bewegungsbahnen basieren beispielsweise auf bestimmten relativen Positionen und Lagen, sie können aber auch durch einen Anwender vorgegeben werden.

Dies wird ermöglicht durch eine jeweilige Manipulationseinrichtung, die jeweils ausgebildet ist, um die Strahlendetektionsvorrichtung 210 oder die Strahlensendevorrichtung 220 entlang ihrer jeweiligen Bewegungsbahn zu verfahren.

Die Strahlendetektionsvorrichtung 210 ist also an einer Manipulationsvorrichtung 240 befestigt und die Strahlensendevorrichtung 220 entsprechend an einer Manipulationseinrichtung 250.

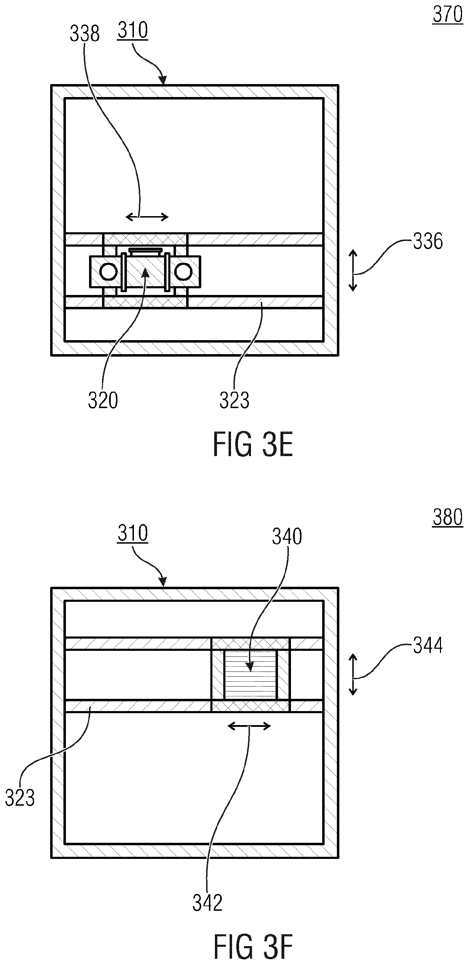

Die hier schematisch und perspektivisch gezeichneten Manipulationseinrichtungen 240 und 250 ermöglichen jeweils eine geradlinige Bewegung der Strahlendetektionsvorrichtung 210 bzw. der Strahlensendevorrichtung 220 entlang einer ersten Richtung oder entlang einer zweiten Richtung. Diese Bewegungen können beispielsweise kombiniert, sequentiell oder auch simultan ausgeführt werden. Damit sind verschiedene Bewegungs- oder Trajektoriebahnen mit dieser Konfiguration darstellbar, etwa Kreise oder Ellipsen. In anderen Worten können Röhre oder Detektor auf einem Zwei-Achs-Aufbau in einem kartesischen Koordinatensystem beliebig verfahren werden. Detaillierte Betrachtungen derart ausgebildeter Manipulationseinrichtungen folgen in den Beschreibungen der Figuren 3e und 3f.

Sowohl die Manipulationseinrichtung 240 als auch die Manipulationseinrichtung 250 sind weiterhin an einer jeweiligen Haltevorrichtung befestigt.

Die Manipulationseinrichtung 240 ist an einer Haltevorrichtung 260 befestigt und die Manipulationseinrichtung 250 an einer Haltevorrichtung 270. Die Haltevorrichtungen 260 und 270 ermöglichen beispielsweise eine Anbringung, Befestigung oder Fixierung der jeweiligen Manipulationseinrichtung an dem Objekt 230.

Die näherungsweise quadratisch ausgeformte Haltevorrichtung 260 weist exemplarisch vier Beine auf, wobei ein Bein jeweils an einer Ecke der Haltevorrichtung 260 angeordnet ist. Die Beine sind jeweils an einem oberen Ende an Ecken der Vorrichtung 260 jeweils näherungsweise lotrecht befestigt. Die Vorrichtung 260 kann beispielsweise unter Verwendung der Beine an dem Objekt 230 befestigt werden. Die Anordnung der Beine an den Ecken kann dabei beispielsweise eine Beeinflussung der Durchstrahlung des Objekts 230 verringern.

In der Fig. 2 sind lediglich drei Beine 214, 216 und 218 dargestellt, da ein viertes Bein aufgrund der Perspektive von der Haltevorrichtung 260 verdeckt ist.

Ein Bein ist jeweils in einem oberen Bereich dunkler schattiert und etwas breiter als in einem unteren Bereich dargestellt. Dadurch wird verdeutlicht, dass Beine beispielsweise eine einstellbare oder variable Länge aufweisen können. Somit kann beispielsweise eine Anbringung an unregelmäßig oder allg. unvorteilhaft geformten Oberflächen ermöglicht oder zumindest begünstigt oder vereinfacht werden.

An einem unteren Ende weisen die Beine 214, 216 und 218 jeweils ein Verbindungselement 222, 224 und 226 auf, das jeweils ausgebildet sein kann, um die Anbringung der Vorrichtung 260 an dem Objekt 230 zu ermöglichen. Bei einem jeweiligen Verbindungselement 222, 224 oder 226 kann es sich beispielsweise um einen Saugnapf, einen Magneten, einen adhäsiven Halter, einen Haken, eine Schraubverbindung oder eine Klebeverbindung handeln.

Die Haltevorrichtung 270 weist vier ähnlich ausgeformte Beine 228, 232, 234 und 236 auf, wobei das vom Betrachter aus gesehen linke hintere Bein 228 durch die perspektivische Darstellung bedingt von dem Objekt 230 fast zur Gänze verdeckt wird. Ebenfalls von dem Objekt 230 verdeckt sind Verbindungselemente, die wie im Vorhergehenden beschrieben ausgeführt sein können. Sie ermöglichen oder begünstigen also beispielsweise eine Anbringung der Vorrichtung 270 an der unteren Seite des Objekts 230.

Durch die gezeigte Konfiguration der Haltevorrichtungen 260 und 270 kann beispielsweise erreicht werden, dass die Bewegungsbahn der Strahlendetektionsvorrichtung 210 näherungsweise in einer ersten Ebene verläuft und die Bewegungsbahn der Strahlensendevorrichtung 220 näherungsweise in einer zweiten Ebene verläuft, wobei die erste Ebene und die zweite Ebene zueinander parallel sind.

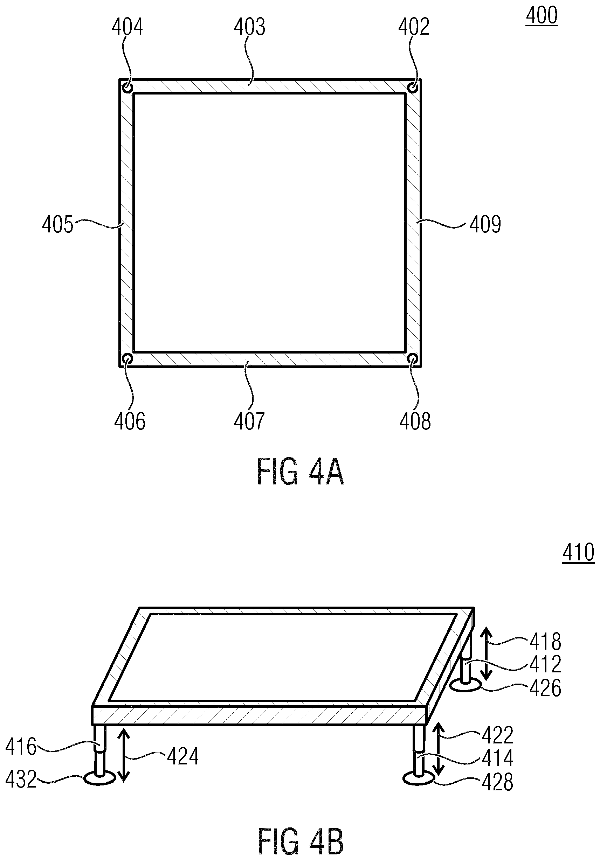

Detaillierte Betrachtungen derartiger oder anders ausgebildeter Haltevorrichtungen folgen in den Beschreibungen der Figuren 4a und 4b.

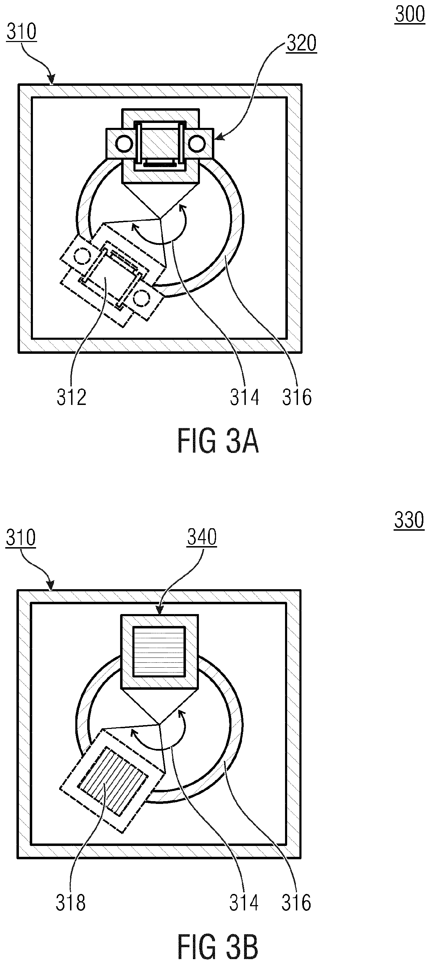

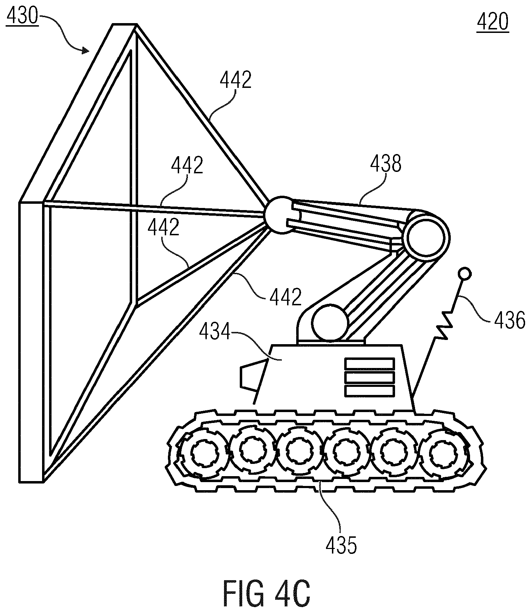

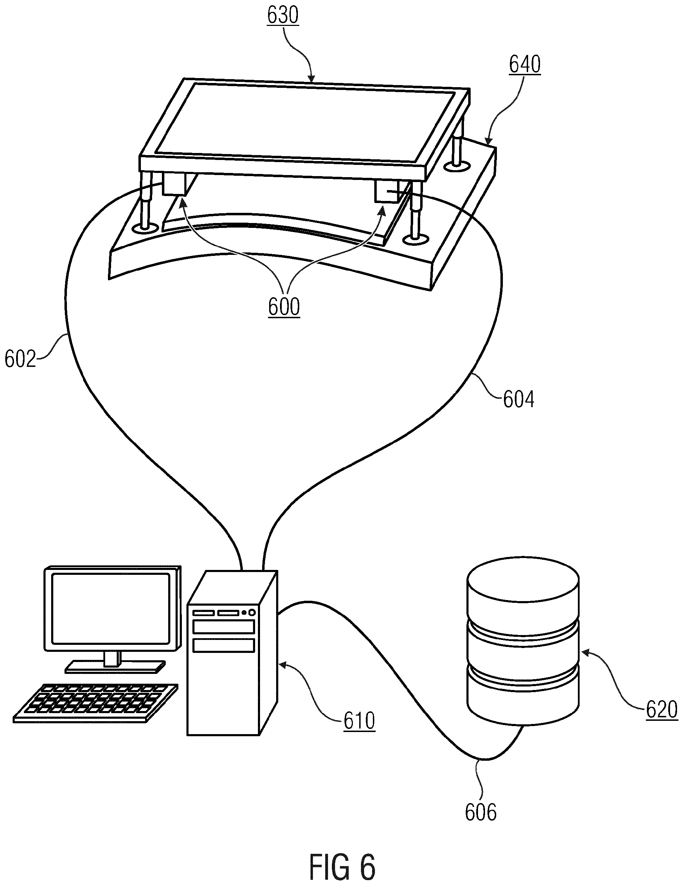

Bei einem weiteren Ausführungsbeispiel ist die Manipulationseinrichtung 250 um ein vom restlichen System losgelöstes Teilsystem, welches eine Röntgenquelle trägt und manipuliert. Dieses Teilsystem ist beispielsweise aus einem Manipulator gemäß einer Manipulationseinrichtung (siehe Figuren 3a-f) aufgebaut und entweder mit Halterungen versehen bzw. an einer Haltevorrichtung befestigt (siehe Figuren 4a und 4b) oder an einem Manipulator gemäß einer Positionierungsvorrichtung (siehe Fig. 4c) befestigt. Es trägt gegebenenfalls zusätzlich Vorrichtungen zur Oberflächenabtastung des Prüfgegenstandes gemäß einer Abtastvorrichtung (siehe Fig. 6) sowie zur Positions- und Lagebestimmung gemäß einer Lokalisierungseinrichtung (wobei beispielsweise eine initiale Position und Lage der Röntgenquelle einen Bezugspunkt definiert) und zur Bewegungsverfolgung gemäß einem Bewegungssensor - (entweder) eigenständig mit der Manipulationseinrichtung 240 oder in einem Ortungssystem gemäß einer Lokalisierungseinrichtung, beispielsweise bestehend aus einer oder mehreren frei im Raum platzierbaren Stationen (siehe Figuren 5a und 5b).

Bei einem weiteren Ausführungsbeispiel ist die Manipulationseinrichtung 240 um ein vom restlichen System losgelöstes Teilsystem, welches einen Röntgensensor trägt und manipuliert. Dieses Teilsystem ist beispielsweise aus einem Manipulator gemäß einer Manipulationseinrichtung (siehe Figuren 3a-f) aufgebaut und entweder mit Halterungen versehen bzw. an einer Haltevorrichtung befestigt (siehe Figuren 4a und 4b) oder an einem Manipulator gemäß einer Positionierungsvorrichtung (siehe Fig. 4c) befestigt. Als Sensor kann ein Flachbilddetektor ebenso eingesetzt werden wie eine Aufnahmezeile oder Speicherfolien. Dieses Teilsystem trägt gegebenenfalls zusätzlich Vorrichtungen zur Oberflächenabtastung des Prüfgegenstandes gemäß einer Abtastvorrichtung (siehe Fig. 6) sowie zur Positions-und Lagebestimmung gemäß einer Lokalisierungseinrichtung (wobei beispielsweise eine initiale Position und Lage des Röntgensensors einen Bezugspunkt definiert) und zur Bewegungsverfolgung gemäß einem Bewegungssensor - (entweder) eigenständig mit der Manipulationseinrichtung 250 oder in einem Ortungssystem gemäß einer Lokalisierungseinrichtung, beispielsweise bestehend aus einer oder mehreren frei im Raum platzierbaren Stationen (siehe Figuren 5a und 5b).

Es ist ebenfalls denkbar, dass die Lage der Strahlensendevorrichtung, die Lage der Strahlendetektionsvorrichtung oder Veränderungen derselben auf andere Weise bestimmt wird, beispielsweise unter Verwendung eines Gyroskops oder eines Gyroskopsensors.

Die Vorrichtung 200 oder eine ähnlich ausgelegte Vorrichtung kann alternativ als transportables, selbstabgleichendes System zur tiefenaufgelösten röntgenographischen Untersuchung von großen Objekten bezeichnet werden. Ein wesentliches Prinzip eines solchen Systems ist beispielsweise, durch ein Röntgenbildgebungssystem mit mechanisch nicht verbundenen Teilsystemen für Röntgenröhre und -Detektor unter Anwendung schichtbildgebender Verfahren (Laminographie) dreidimensionale volumetrische Aufnahmen eines zu untersuchenden Objektes zu erzeugen.

Durch die mechanische Trennung der einzelnen Komponenten ist ein solches System beispielsweise transportabel, kann leicht zu relevanten Objekten transportiert und dort kurzfristig, ad hoc in Betrieb genommen werden. Besonders für große, nahezu plane Objekte, welche u. U. nur schwer in den Labors klassischer Computertomographen untersucht werden können, kann diese Lösung die Möglichkeit bieten, mit einem kostengünstigen Aufbau tiefenaufgelöste Röntgenaufnahmen zu erfassen.

Der mobile Einsatz kann beispielsweise die Inspektion von Rotorblättern von Windkraftanlagen, von Mauerwerk oder von Flugzeugkomponenten in situ mit dreidimensionaler Röntgenbildgebung erlauben.

Im Gegensatz beispielsweise zu hochpräzisen Roboter-CT Lösungen entfällt dabei möglicherweise ein mechanisch oder algorithmisch sehr aufwendiger und möglicherweise noch nicht endgültig gelöster Kalibriervorgang aller Freiheitsgrade eines solchen Robotersystems. Stattdessen wird das (Aufnahme-)System z. B. einfach an das (zu prüfende) Objekt angesetzt und bestimmt schnell und zuverlässig seine relative Lage und Orientierung sowohl zu sich selbst als auch zum Objekt bzw. zum Prüfgegenstand. Dies ist möglicherweise der wichtigste Vorteil des (Aufnahme-)Systems.

Die nun folgenden Figuren 3a-f zeigen verschiedene beispielhafte Manipulationseinrichtungen.

Fig. 3a zeigt eine beispielhafte Manipulationseinrichtung 300 mit einem quadratischen Rahmen 310 und einer schematisch gezeichneten Strahlensendevorrichtung (bzw. einer Röntgenquelle) 320. Die Strahlensendevorrichtung 320 ist ausgebildet, um auf einem Kreis mit einem vordefinierten Radius um einen Mittelpunkt der Einrichtung 300 zu rotieren, wie es durch eine gestrichelt gezeichnete Sendevorrichtung 312 und einen gekrümmten Doppelpfeil 314 angedeutet ist. Die Rotation kann mit dem oder gegen den Uhrzeigersinn erfolgen. Der Mittelpunkt der Einrichtung 300 entspricht dabei exemplarisch auch einem Mittelpunkt des Rahmens 310. Dies kann beispielsweise realisiert werden, indem die Strahlensendevorrichtung 320 auf einer kreisringförmigen Bahn 316 verfahrbar ausgebildet ist. In anderen Worten kann die Strahlensendevorrichtung 320 beispielsweise mechanisch einfach und zugleich inhärent präzise auf der fest vordefinierten (z. B. eingefrästen) Kreisbahn 316 ähnlich einem Zirkel um den Mittelpunkt der Einrichtung 300 rotieren. Ein Verlauf einer entsprechenden Bewegungsbahn weist mithin einen Kreis mit einem vordefinierten Radius auf.

Fig. 3b zeigt eine beispielhafte Manipulationseinrichtung 330, die wiederum einen Rahmen 310 aufweist. Die Einrichtung 330 ähnelt der Einrichtung 300. An der Stelle der Strahlensendevorrichtung 320 (siehe Fig. 3a) ist nun jedoch eine Strahlendetektionsvorrichtung (bzw. ein Röntgensensor) 340 angeordnet. Diese ist wiederum in einer oder zwei Richtung(en) des Doppelpfeils 314 um einen Mittelpunkt des Gerätes bzw. um einen Mittelpunkt der Einrichtung 330 rotier- oder drehbar. Dies ist abermals durch eine gestrichelte Darstellung 318 angedeutet. Die Strahlendetektionsvorrichtung 340 ist in anderen Worten also ausgebildet, um entlang oder auf einer Kreisbahn 316 um den Mittelpunkt des Gerätes 330 zu rotieren.

In anderen Worten wird die Drehbarkeit sowohl der Vorrichtung 320 als auch der Vorrichtung 340 durch ein jeweiliges Rotationsmanipulationssystem ermöglicht.

Würden die Manipulationseinrichtungen 300 (s. Fig. 3a) und 330 beispielsweise verwendet, um ein zwischen ihnen angeordnetes Objekt zu durchstrahlen, so könnte die Rotation der Strahlendetektionsvorrichtung 340 beispielsweise phasenverschoben zu einer Rotation der Strahlensendevorrichtung 320 (s. Fig. 3a) erfolgen, um aus einem möglichst großen Winkelbereich aufgenommene Durchstrahlungsbilder zu erhalten, was für die Erzeugung einer möglichst hochaufgelösten oder genauen Darstellung vorteilhaft sein kann.

Alternativ kann beispielsweise entweder nur die Strahlensendevorrichtung 320 oder nur die Strahlendetektionsvorrichtung 340 an einer Manipulationseinrichtung gemäß der Fig. 3a oder gemäß der Fig. 3b angebracht sein.

Das jeweilige andere Teilsystem kann dann beispielsweise ortsfest an dem Objekt angeordnet sein, oder aber an einer anders ausgeformten Manipulationseinrichtung befestigt sein.

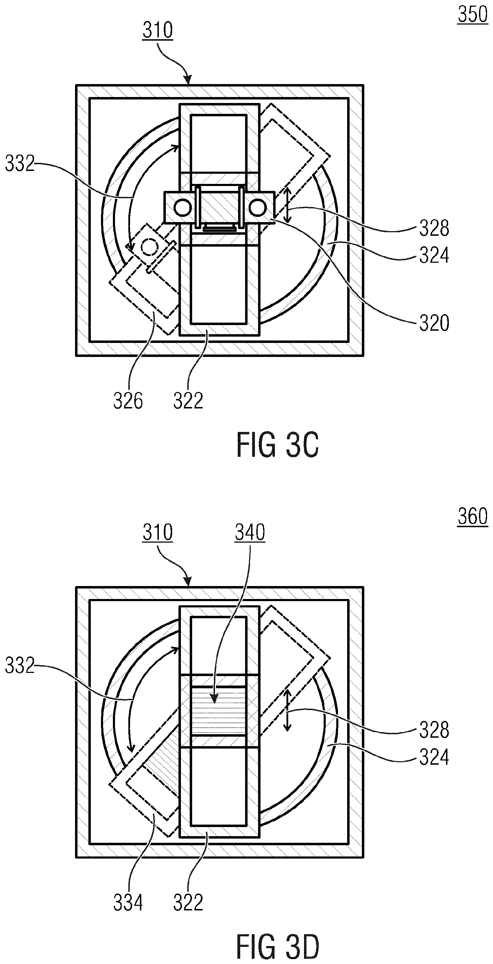

Fig. 3c zeigt eine weitere beispielhafte Manipulationseinrichtung 350.

Diese weist zunächst einen Rahmen 310 gemäß einer der Figuren 3a oder 3b auf. Die Strahlensendevorrichtung (bzw. die Röntgenquelle) 320 ist nun jedoch entlang einer anders ausgeformten Bewegungsbahn verfahrbar ausgebildet.

Dies wird durch eine im Vergleich zu der Einrichtung 300 veränderte Konfiguration erreicht. Die Sendevorrichtung 320 ist nun an einem rechteckförmigen Rahmen 322 angeordnet, der an einer langen Seite etwas kürzer als eine Seite des Rahmens 310 ausgedehnt ist, und auf dem die Strahlensendevorrichtung 320 entlang der langen Seite linear oder translatorisch (in der Bildebene) nach oben oder unten verfahrbar ausgebildet ist, wie es durch einen daneben eingezeichneten Doppelpfeil 326 angedeutet ist. Dies kann beispielsweise durch ein geeignetes Lager ermöglicht werden. In anderen Worten kann die Vorrichtung 320 hier in einem oder durch ein Translationssystem bewegt oder verfahren werden.

Der gesamte Rahmen 322 ist auf einer Kreisbahn 324 verfahr- bzw. drehbar ausgebildet. Dies wird durch einen gekrümmten Doppelpfeil 332 und durch einen gestrichelten Rahmen bzw. eine gestrichelte Strahlensendevorrichtung 326 angedeutet. Die Strahlensendevorrichtung 320 kann also beispielsweise an einer Achse mit variabler Länge und somit mit variablem Radius um einen Mittelpunkt des Systems bzw. der Einrichtung 350 rotieren. In anderen Worten kann die Vorrichtung 320 hier in einem oder durch ein Rotationsmanipulationssystem bewegt oder verfahren werden.

Vorteilhaft an der gezeigten Konfiguration ist beispielsweise die mechanische Einfachheit. Darstellbar sind mit dieser Konfiguration z. B. Bewegungsbahnen, die einen Kreis mit einem variablen Radius aufweisen. Dies kann als ein Zwischenschritt sowohl hinsichtlich Komplexität als auch Flexibilität bezeichnet werden.

Fig. 3d zeigt eine beispielhafte Manipulationseinrichtung 360.

Die Manipulationseinrichtung 360 kann als eine Modifikation der Manipulationseinrichtung 350 (siehe Fig. 3c) bezeichnet werden. Neben dem Rahmen 310 weist sie ebenfalls den Rahmen 322 auf, der auf der Kreisbahn 324 verfahrbar ausgebildet ist.

An der Stelle der Strahlensendevorrichtung 320 (siehe nochmals Fig. 3c) ist nun eine Strahlendetektionsvorrichtung (bzw. ein Röntgensensor) 340 dargestellt, wie sie auch in der Fig. 3b gezeigt ist. Die Strahlendetektionsvorrichtung 340 ist nun also ähnlich der Strahlensendevorrichtung 320 in Fig. 3c zunächst nach oben oder unten, also entlang einer ersten Achse oder in einem oder durch ein Translationssystem, verfahrbar. Dies ist wieder durch den Doppelpfeil 328 angedeutet.

Ebenso ist die Strahlendetektionsvorrichtung 340 entlang eines Kreises mit einem variablen Radius in einem oder durch ein Rotationsmanipulationssystem verfahrbar. Dies wird wie im vorher beschriebenen Fall durch eine kreisförmige Bewegung des Rahmens 322, mit dem oder gegen den Uhrzeigersinn, ermöglicht, wie es wiederum durch den Doppelfeil 332 und einen gestrichelt gezeichneten Rahmen bzw. eine gestrichelt gezeichnete Strahlendetektionsvorrichtung 334 angedeutet ist.

Werden die Einrichtung 350 und die Einrichtung 360 beispielsweise in einer Vorrichtung zur Erzeugung einer dreidimensionalen Darstellung eines zwischen der Einrichtung 350 und der Einrichtung 360 angeordneten Objekts verwendet, so können durch die verschiedenen darstellbaren Trajektoriebahnen beispielsweise verschiedene Gebiete oder Bereiche des Objekts gezielt durchstrahlt werden. Somit kann z. B. eine dreidimensionale Rekonstruktion von je nach Anwendungsfall besonders interessanten Bereichen oder Gebieten des zu prüfenden Objekts oder allgemein eines Prüfgegenstandes erfolgen. Denkbar ist beispielsweise, dass nach Fehlern in bestimmten möglicherweise kritischen Bereichen oder Gebieten gesucht wird. Gemäß weiteren Ausführungsbeispielen kann zu diesem Zwecke eine Rechenvorrichtung ausgebildet sein, um eine Auswertung der erzeugten dreidimensionalen Darstellung hinsichtlich eines Defektes oder einer Fehlstelle, beispielsweise durch Vergleich mit gespeicherten Referenzdarstellungen, durchzuführen. Eine solche Auswertung könnte z. B. manuell, halb- oder vollautomatisch erfolgen.

Fig. 3e zeigt eine weitere beispielhafte Manipulationseinrichtung 370.

Die Manipulationseinrichtung 370 weist die aus den Figuren 3a und 3c bekannten Komponenten Rahmen 310 und Strahlensendevorrichtung (bzw. Röntgenquelle) 320 auf. Der weitere Aufbau entscheidet sich jedoch von den vorher gezeigten beispielhaften Manipulationseinrichtungen.

Es handelt sich hier um einen sogenannten Zwei-Achs-Aufbau, der beispielsweise eine (möglicherweise durch den Rahmen 310 begrenzte) Bewegung in einem kartesischen Koordinatensystem ermöglicht. Dementsprechend sind zwei Doppelpfeile 336 und 338, die mögliche Bewegungsrichtungen angeben, annähernd rechtwinklig zueinander dargestellt. Der rechts neben der Strahlensendevorrichtung 320 angeordnete Pfeil 336 zeigt dabei nach oben und unten und verdeutlicht entsprechend eine mögliche Bewegung in einer ersten kartesischen Richtung (beispielsweise in einer y-Richtung) und der über der Strahlensendevorrichtung 320 angeordnete Pfeil 338 zeigt nach links und rechts und verdeutlicht somit eine mögliche Bewegung in einer zweiten kartesischen Richtung (beispielsweise in einer x-Richtung).

Diese geradlinige Bewegung entlang der ersten Richtung oder entlang der zweiten Richtung (oder beides kombiniert) wird durch den Aufbau der Manipulationseinrichtung 370 ermöglicht. Die Strahlensendevorrichtung 320 ist wiederum auf einem flächenmäßig kleiner als der Rahmen 310 ausgebildeten rechteckförmigen Rahmen 323 verfahrbar ausgebildet, dessen lange Seite nun aber eine annähernd gleiche Ausdehnung wie der Rahmen 310 aufweist. Der Rahmen 322 ist exemplarisch an einer linken und einer rechten Seite des Rahmens 310 ähnlich einer Linearführung verfahrbar ausgebildet, was beispielsweise durch ein Gleitlager oder ein einfaches Schienensystem realisiert werden kann. So wird eine Bewegung entlang der ersten Richtung ermöglicht, wie es durch den in der Zeichnung rechts angeordneten Doppelpfeil 336 angedeutet ist.

Die Strahlensendevorrichtung 320 ist auf dem Rahmen 323 nach links und rechts, also entlang der zweiten Richtung verfahrbar ausgebildet, wie es durch den darüber eingezeichneten Doppelpfeil 338 angedeutet wird. Es kann somit innerhalb des wie beschrieben geschaffenen kartesischen Koordinatensystems eine beliebige, beispielsweise kreis- oder ellipsenförmige Bewegungsbahn für die Strahlensendevorrichtung 320 ermöglicht werden.

Die Strahlensendevorrichtung 320 ist in der gezeigten Konfiguration exemplarisch an einer linken unteren Ecke des Rahmens 310 angeordnet dargestellt. Dies kann bei einem Ausführungsbeispiel durch ein Verfahren der Strahlensendevorrichtung 320 an eben diese Position (bspw. in x- und y-Koordinaten dargestellt) erreicht werden.

In anderen Worten können Röhre oder Detektor sehr flexibel, aber mechanisch aufwendig auf einem Zwei-Achs-Aufbau in einem kartesischen Koordinatensystem beliebig verfahren werden - es entstehen beispielsweise Bilder gemäß einer Trajektorie zur Tomosynthese.

Fig. 3f zeigt eine beispielhafte Manipulationseinrichtung 380.

Die Manipulationseinrichtung 380 weist die bereits bekannten Rahmen 310 und 323 auf. Auf letzterem verfahrbar angeordnet ist nun jedoch die Strahlendetektionsvorrichtung (bzw. der Röntgensensor) 340.

Die Strahlendetektionsvorrichtung 340 kann, wie in der Beschreibung der Fig. 3e ausführlich erläutert, entlang einer oder zweier Richtungen bzw. in einem kartesischen Koordinatensystem verfahren werden. Eine erste Richtung wird durch einen unterhalb der Strahlendetektionsvorrichtung 340 angeordneten horizontalen Doppelpfeil 342 und eine zweite Richtung durch einen rechts neben dem Rahmen 323 angeordneten vertikalen Doppelpfeil 344 angedeutet.

Die Strahlendetektionsvorrichtung 340 ist in der gezeigten Konfiguration exemplarisch an einer rechten oberen Ecke des Rahmens 310 angeordnet dargestellt. Dies kann bei einem Ausführungsbeispiel durch ein Verfahren der Strahlendetektionsvorrichtung 340 an eben diese Position (bspw. in x- und y-Koordinaten dargestellt) erreicht werden.

Würden die Manipulationseinrichtungen 370 und 380 beispielsweise verwendet, um eine Durchstrahlung eines flachen Objekts auszuführen, so könnte aus den in den Figuren 3e und 3f gezeigten respektiven Positionen der Strahlensendevorrichtung 320 und der Strahlendetektionsvorrichtung 340 eine ähnliche Konfiguration wie in der Fig. 2 gezeigt resultieren.

In anderen Worten zeigen die Figuren 3a-f beispielhafte Manipulationssysteme, die als Bestandteil beider bzw. zweier Teilsysteme bildgebenden Komponenten auf Trajektorien verfahren (können). Die Manipulationssysteme können wahlweise mit verschiedenartiger Mechanik und somit mit verschiedenen darstellbaren Trajektorien realisiert werden. Sehr flexibel, aber mechanisch aufwändig können Röhre oder Detektor auf einem Zwei-Achs-Aufbau in einem kartesischen Koordinatensystem beliebig verfahren werden (siehe die Figuren 3e und 3f) - es entstehen beispielsweise Bilder gemäß einer Trajektorie zur Tomosynthese. Mechanisch einfach und zugleich inhärent präzise zu realisieren können Röhre oder Detektor auf einer fest vordefinierten (z. B. eingefrästen) Kreisbahn ähnlich einem Zirkel um den Mittelpunkt des Gerätes rotieren (siehe die Figuren 3a und 3b). Als Zwischenschritt sowohl hinsichtlich Komplexität als auch Flexibilität können Röhre oder Detektor an einer Achse mit variabler Länge und somit mit variablem Radius um einen Mittelpunkt des jeweiligen Systems rotieren (siehe die Figuren 3c und 3d).

Fig. 4a zeigt eine schematische Aufsicht einer beispielhaften Haltevorrichtung 400.

Die Haltevorrichtung 400 kann zunächst als Modifikation des Rahmens 300 (siehe Figuren 3a-f) bezeichnet werden. Ein solcher Rahmen kann also beispielsweise Teil einer Manipulationseinrichtung oder einer Haltevorrichtung sein. Auch eine Positionierungsvorrichtung kann einen derartig oder ähnlichen geformten Rahmen aufweisen (siehe Fig. 4c).

Die Haltevorrichtung 400 ist aus vier jeweils an den Enden verbundenen länglichen Teilelementen 403, 405, 407 und 409 aufgebaut, dergestalt, dass die entstehende Struktur einen Rahmen formt, der an eine Begrenzungslinie eines Quadrates erinnert. Die Teilelemente 403, 405, 407 und 409 können bspw. ausgebildet sein, um einen kleineren Rahmen, der wiederum eine Strahlensende- oder Detektionsvorrichtung tragen kann, zu tragen oder linear zu führen (siehe die Figuren 3e und 3f).

Ein entsprechender kleinerer Rahmen kann dazu beispielsweise auf jeweiligen linken und rechten Teilelementen 405 und 409 der Haltevorrichtung 400 verfahrbar angebracht sein, um eine Bewegung nach oben oder unten (also in eine y-Richtung oder entlang einer y-Achse) zu ermöglichen. Entsprechend könnte solch ein kleinerer Rahmen auch an einem oberen und unteren Teilelement 403 und 407 der Haltevorrichtung 400 befestigt sein, um in entsprechender Weise eine Bewegung nach links oder rechts (in einer x-Richtung oder entlang einer x-Achse) zu ermöglichen. Alternativ trägt die Haltevorrichtung 400 eine Manipulationseinrichtung (siehe die Figuren 3a-f).

Hieraus kann sich eine duale Funktionalität ergeben, da die Haltevorrichtung 400 also möglicherweise eine tragende (statische) Eigenschaft aufweist und gleichzeitig das Verfahren beispielsweise einer Strahlensende- oder Strahlendetektionsvorrichtung unter Verwendung eines kleineren Rahmens ermöglichen kann, wobei einzelne Teilelemente 403, 405, 407 und 409 als Schienen fungieren können.

Auf ähnliche Weise können die Teilelemente 403, 405, 407 und 409 zwei Funktionen erfüllen, wenn sie beispielsweise als Schiene und gleichzeitig als Halterung, z. B. für eine Manipulationseinrichtung, dienen.

Die Haltevorrichtung 400 weist ferner an den Ecken angeordnete Beine 402, 404, 406 und 408 auf. Da die gezeigte Darstellung eine Aufsicht ist, sind diese nur durch kleine (jeweils an den Ecken angeordnete) dunkel gefärbte Kreise dargestellt. Es kann sich beispielsweise um Stützbeine, aber auch um Magnet- oder Saugbeine handeln.

Der aus den Teilelementen 403, 405, 407 und 409 gebildete Rahmen (oder eine ähnliche mechanische Konstruktion) kann somit beispielsweise ein Teil einer Manipulationseinrichtung (s. Figuren 3a-f), aber auch ein Teil einer Haltevorrichtung oder aber auch ein Teil von beiden gleichzeitig sein.

Ebenfalls denkbar ist, dass eine Positionierungsvorrichtung eine solchen oder einen ähnlichen Rahmen aufweist (siehe Fig. 4c).

Fig. 4b zeigt eine schematische perspektivische Ansicht einer beispielhaften Haltevorrichtung 410.

Die Haltevorrichtung 410 kann als eine Modifikation der Haltevorrichtung 400 bezeichnet werden. Sie weist Beine 412, 414 und 416 auf, die an den Ecken der Haltevorrichtung 410 bzw. jeweils an einer Stelle, an der Teilelemente des Rahmens verbunden sind, angeordnet sind. Ein viertes Bein ist in der gezeigten Ansicht verdeckt.

Bei den gezeigten Beinen 412, 414 und 416 (und auch bei dem nicht gezeigten Bein) kann es sich beispielsweise um Saugbeine oder auch um Stütz-/Magnetbeine handeln.

Die Haltevorrichtung 410 weist ebenfalls einen näherungsweise quadratischen Aufbau auf (in der Zeichnung aufgrund der perspektivischen Darstellung verzerrt). Die Beine 412, 414 und 416 sind dabei gemäß einer vorteilhaften Weiterbildung der vorliegenden Erfindung so ausgebildet, dass sie eine variable Länge haben. Dies ist durch Pfeile 418, 422 und 424 angedeutet. Durch diese variable Länge kann eine Anbringung der Vorrichtung 410 an verschiedenartig geformten Oberflächen ermöglicht werden. Dies kann etwa so geschehen, dass eines der drei Beine 412, 414 oder 416 eine andere Länge hat als die jeweils anderen Beine, so dass entsprechend eine stabile mechanische Verbindung ermöglicht werden kann. Dies kann insbesondere auch in Kombination mit einer Positionierungsvorrichtung vorteilhaft sein, wie sie in der Fig. 4c gezeigt und in der zugehörigen Beschreibung erläutert werden wird.

An einer unteren Seite der Beine 412, 414 und 416 jeweils angeordnet sind Haltefüße 426, 428 und 432. Diese können beispielsweise jeweils einen Saugnapf, einen Magneten, einen adhäsiven Halter, einen Haken, eine Schraubverbindung oder eine Klebeverbindung darstellen. Je nach Anwendungsfall kann somit bspw. eine sichere und stabile Fixierung oder Anbringung der Haltevorrichtung 410 an verschiedenen Prüfgegenständen bzw. Prüfgegenstandsoberflächen ermöglicht werden.

In anderen Worten kann es sich bei den Haltevorrichtungen 400 und 410 also beispielsweise um mechanische Haltevorrichtungen handeln, die ausgebildet sind, um beide Teilsysteme (etwa Röntgenquelle und Röntgensensor) am Prüfgegenstand zu befestigen. Diese (mechanischen) Haltevorrichtungen erlauben, die Teilsysteme manuell frei am Prüfling zu platzieren und dort zu fixieren. Die Anbringung kann beispielsweise durch Saugnäpfe, Magnete, adhäsive Halter, Haken, Schraub- oder Klebeverbindungen realisiert werden. Das System ist beispielsweise durch drei oder mehr gegebenenfalls auch motorisiert verfahrbare Beine mit den Haltefüßen (426, 428 und 432) verbunden.

Fig. 4c zeigt eine beispielhafte Positionierungsvorrichtung 420.

Die Positionierungsvorrichtung 420 wird exemplarisch durch einen Roboter dargestellt, der ausgebildet ist, um eine robotergestützte Anbringung zu ermöglichen.

Der Roboter 420 weist einen Rumpf 434 auf.

Der Roboter 420 ist exemplarisch als Kettenfahrzeug ausgebildet und auf einer unten an dem Rumpf 434 angeordneten Gleiskette 435 fahrbar ausgelegt.

An einer rechten Seite des Rumpfes 434 befestigt ist eine Antenne 436, die beispielsweise zur Kommunikation mit der Positionierungsvorrichtung 420 oder zur Steuerung derselben ausgebildet sein kann.

Weiterhin ist oben am Rumpf 434 ein exemplarisch drei Gelenke aufweisender mechanischer Arm 438 angebracht, der beispielsweise ausgebildet sein kann, um eine an ihm befestigte Vorrichtung in zumindest zwei Raumrichtungen zu positionieren. Eine Positionierbarkeit in einer dritten Raumrichtung kann beispielsweise durch ein Verfahren des Roboters auf den Gleisketten 435 oder durch das Verwenden eines anders ausgebildeten mechanischen Arms ermöglicht werden.

An einem Ende des Arms 438, der nicht mit dem Rumpf 434 verbunden ist, ist vermittels vier strahl- oder pyramidenförmig angeordneter dünner Streben 442 ein näherungsweise quadratischer Rahmen 430 angebracht.

Der Rahmen 430 könnte beispielsweise aus einer Modifikation des Rahmens 310 (siehe Figuren 3a-f) oder der Haltevorrichtung 400 (siehe Fig. 4a) hervorgehen. Entsprechend könnte der Rahmen 430 beispielsweise eine Manipulationseinrichtung tragen bzw. ein Teil von dieser sein.

Der Rahmen 430 ist exemplarisch als keine Beine aufweisend dargestellt. Dies ist lediglich ein Ausführungsbeispiel, es ist ebenfalls denkbar, dass in ähnlicher Weise wie bei der Haltevorrichtung 410 Beine an den Ecken des Rahmens 430 angeordnet sind. Diese könnten ein Ansetzen an ein zu prüfendes Objekt erleichtern oder beispielsweise verhindern, dass eine an dem Rahmen 430 befestigte Manipulationseinrichtung (und etwa daran befestigte bildgebende Komponenten) bei einem Ansetzvorgang versehentlich beschädigt wird.

Die Positionierungsvorrichtung 420 ist ausgebildet, um den Rahmen 430 relativ zu einem zu prüfenden Objekt zu positionieren. Je nach Ausführungsform der Positionierungsvorrichtung 420 kann diese dabei beispielsweise eine Untersuchung auch von großen oder unhandlichen Objekten, die möglicherweise nicht oder nur schwer unter Verwendung klassischer Labor-CT-Geräte untersucht werden können, ermöglichen. Es kann also beispielsweise eine variable Platzierung von bildgebenden Teilsystemen an verschiedenen Prüfregionen und Gegenständen ermöglicht werden.

Darüber hinaus kann nicht nur eine Manipulationseinrichtung, sondern auch beispielsweise eine Lokalisierungseinrichtung oder auch eine Abtastvorrichtung (siehe Fig. 6) an dem Rahmen 430 befestigt und somit entsprechend im Raum positionierbar sein.

Unter Verwendung der Positionierungsvorrichtung 420 kann beispielsweise eine sequentielle Abtastung oder ein sequentielles Abfahren verschiedener Bereiche eines Objekts durchgeführt werden. Somit kann beispielsweise eine halb- oder vollautomatische Untersuchung großer Objekte ermöglicht werden.

In anderen Worten erlaubt der fest installierte Einsatz an einem groben Roboter- oder Manipulatorsystem beispielsweise eine gegebenenfalls automatische, sequentielle Abtastung verschiedener Prüfregionen eines Prüfgegenstandes. Das zu prüfende Objekt braucht dann möglicherweise in keinem Fall mechanisch aufwändig gelagert oder hochpräzise verschoben oder rotiert werden.

Bei einem weiteren Ausführungsbeispiel umfassen Positionierungsvorrichtungen Manipulatoren zur variablen Platzierung der bildgebenden Teilsysteme an verschiedenen Prüfregionen und -Gegenständen. Derartige Manipulatoren können beispielsweise alternativ zu Haltevorrichtungen (siehe die Figuren 4a und 4b) verwendet werden. Ein solches System stellt möglicherweise keine oder nur geringe Anforderungen an die Genauigkeit dieser Manipulatoren. Unter Umständen braucht deren angefahrene Position und Orientierung gar nicht bekannt zu sein. Diese Manipulationssysteme können beispielsweise in Form von Industrierobotern, Deckenschienensystemen, einem Portal, Seilaufhängungen oder einem (Industrie-)Kran ausgeprägt sein.

Fig. 5a zeigt eine beispielhafte Lokalisierungseinrichtung 500 in Kombination mit einem Objekt 510 und einer Haltevorrichtung 520.

In einem mittleren Bereich der Fig. 5a dargestellt ist ein flaches gekrümmtes Objekt 510, das exemplarisch dem Objekt 230 (siehe Fig. 2) ähnelt. An einer oberen Seite des Objekts 510 angebracht oder befestigt ist eine Haltevorrichtung 520, die exemplarisch der Haltevorrichtung 410 (siehe Fig. 4b) ähnelt.

Die Lokalisierungseinrichtung 500 ist in einer linken oberen Ecke der Fig. 5a angeordnet und näherungsweise würfelförmig dargestellt. Die Anordnung der Lokalisierungseinrichtung 500 in der Umgebung des Objekts 510 ist dabei lediglich beispielhaft.

Die Lokalisierungseinrichtung 500 ist beispielhaft ausgebildet, um anhand eines Bezugspunkts 502 eine Position und eine Lage der Haltevorrichtung 510 und eine Position und eine Lage des Objekts 520 zu bestimmen. Dies kann beispielsweise unter Verwendung von oder basierend auf Laser- oder Funkortungstechniken erfolgen.

Der Bezugspunkt 502 ist exemplarisch durch einen kleinen weißen Kreis dargestellt, der an einer rechten Seite der Einrichtung 500 zu sehen ist. Diese Konfiguration ist abermals nur beispielhaft, der Bezugspunkt 502 könnte auch an einer beliebigen anderen Stelle im Raum angeordnet sein.

Die Bestimmung der Positionen und Lagen geschieht exemplarisch unter Verwendung zweier ebenfalls würfelförmig dargestellter sogenannter "Transponder", die ausgebildet sind, um von der Lokalisierungseinrichtung 500 erfasst zu werden. Dabei ist ein Transponder 504 an der Haltevorrichtung 520 angeordnet und ein weiterer Transponder 506 an dem Objekt 510 angeordnet.

Diese Konfiguration ist lediglich beispielhaft. Der Transponder 504 etwa kann alternativ auf vorteilhafte Weise an einer an der Haltevorrichtung 520 befestigten Manipulationseinrichtung bzw. direkt an einer verfahrbaren Strahlensendevorrichtung oder Strahlendetektionsvorrichtung befestigt sein.

Es ist ebenfalls denkbar, dass die Lokalisierungseinrichtung 500 an einer beliebigen anderen Stelle im Raum, oder beispielsweise an dem Objekt 510 befestigt oder angeordnet ist. Auch der Bezugspunkt 502 muss nicht notwendigerweise am Ort der Lokalisierungseinrichtung 500 angeordnet sein. Denkbar wäre etwa eine Anordnung der Lokalisierungseinrichtung 500 direkt an der Haltevorrichtung 520. Ebenfalls denkbar wäre eine Anbringung der Lokalisierungseinrichtung 500 beispielsweise an einer Positionierungsvorrichtung gemäß Fig. 4c oder auch an einer anders ausgeformten Positionierungsvorrichtung.

Ebenfalls nicht zwingend notwendig ist, dass das Objekt 510 mit einem Transponder (506) versehen wird. Eine solche Konfiguration kann jedoch beim Erzeugen der dreidimensionalen tiefenaufgelösten Darstellung des Objekts vorteilhaft sein, da bspw. hierfür notwendige Berechnungen erleichtert werden können.

Die Haltevorrichtung 520 könnte wie erwähnt weiterhin eine Manipulationseinrichtung aufweisen, die ausgebildet sein kann, um eine Strahlensendevorrichtung oder eine Strahlendetektionsvorrichtung entlang einer entsprechenden, möglicherweise vordefinierten oder aber auch (durch einen Benutzer) manipulierbaren Bewegungsbahn zu verfahren.

Alternativ ist ebenfalls vorstellbar, dass Transponder, wie etwa 504 oder 506, an einer entsprechenden Manipulationseinrichtung befestigt sind.

Eine Bestimmung von Position und Lagen von Strahlensendevorrichtung und Strahlendetektionsvorrichtung relativ zueinander könnte weiterhin als Kalibrierschritt vor der eigentlichen Messung oder Untersuchung erfolgen.

In anderen Worten kann es sich bei der Lokalisierungseinrichtung 500 und den Transpondern 504 und 506 um ein Laser- oder Funkortungssystem handeln.

Fig. 5b zeigt eine weitere beispielhafte Lokalisierungseinrichtung 530 in Kombination mit dem Objekt 510 und der Haltevorrichtung 520.

Die Lokalisierungseinrichtung 530 ist abermals würfelförmig ausgebildet und vom Betrachter aus gesehen links oberhalb der Haltevorrichtung 520 angeordnet.

Rechts oberhalb der Haltevorrichtung 520 angeordnet ist eine optische Markierung 512, die exemplarisch durch ein Quadrat mit einem konzentrisch angeordneten in vier flächenmäßig gleiche Segmente unterteilten Kreis dargestellt ist. Die einzelnen Segmente des Kreises sind abwechselnd hell und dunkel gefärbt.

An der Haltevorrichtung 520 näherungsweise mittig angeordnet ist eine ähnlich ausgebildete optische Markierung 514, die aufgrund der perspektivischen Darstellung verzerrt eingezeichnet ist.

Eine weitere ähnlich ausgebildete optische Markierung 516 ist exemplarisch an einer oberen Seite des Objekts 510 angeordnet. Auch diese optische Markierung 516 ist aufgrund der perspektivischen Darstellung verzerrt eingezeichnet.

Die Lokalisierungseinrichtung 530 ist exemplarisch ausgebildet, um eine Lokalisierung basierend auf einer Erfassung der optischen Markierungen 512, 514 und 516 zu ermöglichen. Die optischen Markierungen 512, 514 und 516 können weiterhin ebenfalls als "Transponder" bezeichnet werden.

Die Markierung 512 kann nun beispielsweise als Bezugspunkt dienen, anhand dem (relative) Positionen und Lagen bestimmt werden können. Alternativ kann ein Bezugspunkt beispielsweise an einer rechten Seite der Einrichtung 530 angeordnet sein, wie es durch einen kleinen weißen Kreis 518 angedeutet wird. Ebenfalls denkbar ist, dass ein Bezugspunkt an einer beliebigen anderen Stelle im Raum angeordnet ist.

Die Markierung 512 kann bei einem Ausführungsbeispiel etwa an einer Wand oder an einem Boden eines Raums, in dem ein Objekt untersucht werden soll, angeordnet sein. Es ist denkbar, dass eine solche oder eine ähnliche optische Markierung beispielsweise auf- oder anklebbar ausgeformt ist. Die Lokalisierungseinrichtung 530 kann weiterhin eine Kamera aufweisen, die beispielsweise zur Erfassung solcher oder ähnlicher optischer Markierungen ausgelegt ist.

Im Vergleich zu dem in Fig. 5a gezeigten Fall kann eine Verwendung der optischen Lokalisierungseinrichtung 530 bzw. den optischen Markierungen 512, 514 und 516 z. B. vorteilhaft sein, wenn eine Funkortung, bspw. durch eine metallische Umgebung, gestört werden würde. Da eine Genauigkeit der Lokalisierung auch eine Genauigkeit oder Präzision der später erzeugten dreidimensionalen Darstellung bedingen kann, kann je nach Anwendungsfall beispielsweise die (zusätzliche) Verwendung einer optischen Lokalisierungstechnik vorteilhaft sein.

Die einzelnen optischen Markierungen 512, 514 und 516 können dabei beispielsweise auch an einer an der Haltevorrichtung 520 befestigten Manipulationseinrichtung, oder aber direkt an einer (verfahrbaren) Strahlensendevorrichtung oder Strahlendetektionsvorrichtung angebracht sein.

Die Anordnung der optischen Markierung 516 an dem Objekt 510 ist hier ebenfalls exemplarisch, eine Bestimmung einer Position und einer Lage jeweiliger bildgebender Teilkomponenten kann möglicherweise auch ohne diese erfolgen.

Alternative Ausführungsbeispiele umfassen unterschiedliche optische Markierungen, die ausgebildet sind, um eine möglichst präzise oder schnelle Erfassung zu ermöglichen. Denkbar ist beispielsweise die Verwendung eines QR-Codes als optische Markierung, um beispielsweise eine Lage der Markierung und damit auch die Lage eines entsprechenden Teilsystems, an dem die Markierung befestigt ist, zu bestimmen.

Ein alternatives Ausführungsbeispiel einer Lokalisierungseinrichtung umfasst eine (möglicherweise vom restlichen System unabhängige) Ortungseinrichtung. Diese besteht beispielsweise aus einer oder mehreren frei im Raum platzierbaren Stationen, welche ausgebildet sind, um ein räumliches Bezugssystem schaffen, in welchem bildgebende Teilsysteme in Position und Orientierung lokalisiert werden können. Die Ortung kann beispielsweise ebenso auf Funk basieren wie auch auf einem Laserortungssystem oder einer Positionsbestimmung mittels Kamera und Bezugspunkten im Raum. Jeweils mehrere solcher 'Transponder' können auf Einzelkomponenten eines Gesamtsystems (etwa Strahlensendevorrichtung, Strahlendetektionsvorrichtung oder Abtastvorrichtung (siehe Fig. 6)) zwecks verbesserter Ortung angebracht sein, insbesondere auch auf bewegten Teilen.

Ebenfalls denkbar wäre, dass verschiedene Ortungstechniken gleichzeitig zum Einsatz kommen, um beispielsweise auch unter widrigen Bedingungen (schlechte Sicht, metallische Umgebung) eine präzise und schnelle Lokalisierung zu ermöglichen.

In anderen Worten wird die Position und Ausrichtung der in den Figuren 5a und 5b gezeigten Anlagenteilsysteme relativ zueinander und zum Objekt beispielsweise durch Positionsbestimmungsverfahren mittels eines Funk- oder Laserortungssystem ermittelt.

Fig. 6 zeigt eine beispielhafte Abtastvorrichtung 600 in Kombination mit einer schematisch dargestellten Rechenvorrichtung 610 und einer schematisch dargestellten Speichervorrichtung 620.

Die in der Zeichnung oben angeordnete Abtastvorrichtung 600 ist exemplarisch an einer unteren Seite einer Haltevorrichtung 630 angeordnet, die an einem Objekt 620 über Haltebeine befestigt ist. Die Kombination aus Haltevorrichtung 630 und Objekt 640 ähnelt dabei exemplarisch der in der Fig. 5a oder Fig. 5b gezeigten Konfiguration.

Die Abtastvorrichtung 600 weist exemplarisch zwei würfelförmig ausgeformte Komponenten auf, die jeweils links oder rechts an der Haltevorrichtung 630 befestigt dargestellt sind. Alternativ könnte eine Abtastvorrichtung auch drei oder mehr Komponenten aufweisen, oder auch als einzelne Komponente ausgeprägt sein.

In anderen Worten kann die Abtastvorrichtung 600 oder eine ähnlich ausgelegte Vorrichtung auch als System zur Oberflächenabtastung bezeichnet werden.

Die Abtastvorrichtung 600 ist beispielsweise zur Abtastung einer Oberfläche des Objekts 640 ausgebildet. Diese Abtastung kann z. B. taktil, durch Radar, durch Ultraschall oder durch optische Methoden wie Laserlichtschnittmessungen erfolgen.

Bei einem Ausführungsbeispiel kann die Abtastung der Oberfläche mit optischen Verfahren zumindest teilweise die eingeschränkte Tiefeninformation ergänzen, die von Aufnahmen mit eingeschränktem Winkelbereich herrühren kann. Die Rekonstruktion der Daten kann dann beispielsweise durch angepasste Algorithmen der gefilterten Rückprojektion, algebraischen Rekonstruktion oder Tomosynthese erfolgen. Insbesondere hinsichtlich des unvollständigen Datenbereichs können Methoden zur Datenergänzung bzw. Extrapolation sowie "Region-Of-Interest" (ROI) - Rekonstruktionsverfahren (z. B. basierend auf einer Wavelet- oder Hilbert-Transformation) direkt oder gegebenenfalls nach einer Anpassung (an das neue Messverfahren) zum Einsatz kommen. Die so erzielten bzw. erlangten (Durchstrahlungs-) Bilder bieten dann möglicherweise nicht nur dreidimensionale Information über Kanten und Strukturen im Objekt 640, sondern erlauben beispielsweise auch Schlüsse auf Art, Position und Größe homogener Objektbestandteile.

Alternativ kann mangelnde Information aufgrund nicht realisierbarer Perspektiven durch eine Abtastung der Oberfläche mittels weiterer multimodaler Verfahren ergänzt werden.

Der zusätzliche Einsatz der Oberflächenabtastung durch ergänzende multimodale Methoden erlaubt möglicherweise, Nachteile der Schichtbildgebenden Verfahren gegenüber einer vollständigen Computertomographie drastisch zu reduzieren. Entscheidend ist hierbei beispielsweise, dass eine Oberfläche bzw. ein Abstand zu einer jeweiligen Oberfläche bestimmbar ist. Alternative Ausführungsbeispiele einer Abtastvorrichtung weisen hierzu Ultraschallsensoren auf.

Bei einem weiteren Ausführungsbeispiel ist die Abtastvorrichtung 600 an einer Manipulationseinrichtung oder an einer Positionierungsvorrichtung befestigt, oder auch an einer Strahlensendevorrichtung oder an einer Strahlendetektionsvorrichtung. Alternativ kann die Abtastvorrichtung 600 frei im Raum platzierbar sein.

Bei einem weiteren Ausführungsbeispiel handelt es sich bei der Abtastvorrichtung 600 um eine vom restlichen System unabhängige Einrichtung zur Abtastung der Oberfläche eines Prüfgegenstandes. Diese Oberflächenbestimmung kann ebenso taktil, durch Radar oder Ultraschallverfahren erfolgen wie auch durch optische Methoden wie Laserlichtschnittmessungen. Die Einrichtung zur Oberflächenabtastung kann sowohl fest im Raum aufgebaut sein, wie auch an einer eigenständigen Manipulationseinrichtung, einer Positionierungsvorrichtung oder beispielsweise an Manipulationseinrichtungen, die eine Röntgenquelle oder einen Röntgensensor tragen, oder bspw. auch direkt an einer Strahlensendevorrichtung oder einer Strahlendetektionsvorrichtung.

Die Rechenvorrichtung 610 ist exemplarisch ausgebildet, um ein Ergebnis der Abtastung der Oberfläche zu erhalten. Sie ist daher beispielhaft mit der Abtastvorrichtung 600 verkoppelt, wie es durch durchgezogen gezeichnete Verbindungslinien 602 und 604 angedeutet ist.

Wird das Ergebnis der Abtastung beispielsweise bei der Erzeugung der tiefenaufgelösten dreidimensionalen Darstellung des Objekts 640 berücksichtigt, so kann möglicherweise eine dreidimensionale Rekonstruktion der inneren Struktur des Objekts 640 unterstützt werden. Alternativ kann die Rechenvorrichtung 610 beispielsweise ausgebildet sein, um eine äußere geometrische Hülle des Objekts 640 (oder allgemein eines Prüfgegenstands) zu bestimmen.

Die in der Fig. 6 rechts unten angeordnete Speichervorrichtung 620 kann beispielsweise ausgebildet sein, um eine von der Rechenvorrichtung 610 berechnete oder erzeugte dreidimensionale Darstellung des Objekts 640 zur Speicherung zu erhalten. Daher wird eine exemplarische Verkopplung durch eine durchgezogen gezeichnete Verbindungslinie 606 angedeutet.

Alternativ handelt es sich bei der Speichervorrichtung 620 um ein vom restlichen System unabhängiges Datenbanksystem, das bspw. erfasste Signale, Daten, Lokalisierungsinformationen, erzeugte und verarbeitete Bilder und Auswertungen vorhält und bei Bedarf wieder selektiv zur Verfügung stellt.

Bei einem weiteren Ausführungsbeispiel weist die Rechenvorrichtung 610 ein oder mehrere vom restlichen System unabhängige Rechensysteme auf, die erfasste Daten verarbeiten und Teilsysteme steuern. Die Rechensysteme bestimmen beispielsweise aus erfassten Lokalisierungsdaten Positionen und Ausrichtungen aller Teilsysteme und der Prüfgegenstände im Raum. Möglicherweise bestimmen sie weiterhin eine an eine gegebene Geometrie angepasste Trajektorie der bildgebenden Teilsysteme (etwa Strahlensendevorrichtung und Strahlendetektionsvorrichtung). Darüber hinaus bestimmen sie beispielsweise mittels der Oberflächenabtastung bzw. basierend auf einer Ausgabe der Abtastvorrichtung 600 eine äußere geometrische Hülle des Objekts 640 oder allgemein der Prüfgegenstände. Die Rechensysteme können weiterhin ausgebildet sein, um detektierte Signale des Röntgensensors oder der -sensoren zu verarbeiten, und um aus diesen, bspw. unter Nutzung sowohl von genauen Positions- und Ausrichtungsdaten aller Teile als auch der Oberfläche eines Prüflings tiefenaufgelöste dreidimensionale Darstellungen der inneren Struktur des Prüflings oder Prüfgegenstandes zu rekonstruieren. Die Rechensysteme bieten beispielsweise manuelle, halb- und vollautomatische Auswertungen der dreidimensionalen Bilder des Prüfgegenstandes auf vorher definierte sowie unbekannte Defekte und Merkmale. Die Rechensysteme legen beispielsweise die erfassten Daten und Signale in einem Datenbanksystem bzw. der Speichervorrichtung 620 ab. Die Rechensysteme vergleichen beispielsweise die erfassten Daten mit Referenzaufnahmen und -modellen aus der Datenbank bzw. der Speichervorrichtung 620 und führen beispielsweise offline vom bildgebenden System neue Auswertungen auf Daten im Datenbanksystem bzw. der Speichervorrichtung 620 aus.

Im vorhergehenden wurden Merkmale der Erfindung anhand von Vorrichtungsmerkmalen und/oder Verfahrensmerkmalen beschrieben. Es ist jedoch offensichtlich, dass jeweilige Vorrichtungsmerkmale auch Merkmale entsprechender Verfahren sein können und dass jeweilige Verfahrensmerkmale auch Merkmale entsprechender Vorrichtungen sein können, ohne dass dies jeweils einer separaten Erwähnung bedarf.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung (100; 200) zum Erzeugen einer tiefenaufgelösten dreidimensionalen Darstellung von einem zwischen einer Strahlensendevorrichtung (110; 220; 320) und einer Strahlendetektionsvorrichtung (130; 210; 340) durchstrahlbar angeordneten Objekt (120; 230; 510; 640), mit folgenden Merkmalen:
einem ersten Teilsystem (109), das eine Strahlensendevorrichtung (110) aufweist;
einem zweiten Teilsystem (111), das eine Strahlendetektionsvorrichtung (130) aufweist, die ausgebildet ist, um Durchstrahlungsbilder aufzunehmen,
wobei das erste Teilsystem (109) eine erste Manipulationseinrichtung (113) aufweist, die ausgebildet ist, um die Strahlensendevorrichtung (110) entlang einer ersten Bewegungsbahn (114) zu verfahren, und/oder wobei das zweite Teilsystem (111) eine zweite Manipulationseinrichtung (115) aufweist, die ausgebildet ist, um die Strahlendetektionsvorrichtung (130) entlang einer zweiten Bewegungsbahn (116) zu verfahren, wodurch ein Aufnehmen von Durchstrahlungsbildern von dem Objekt (120) aus verschiedenen Perspektiven ermöglicht wird,
wobei das erste Teilsystem (109) und das zweite Teilsystem (111) unabhängig voneinander relativ zu dem Objekt (120) positionierbar sind;
einer Lokalisierungseinrichtung (119, 121, 140; 500; 504; 506; 512; 514; 516; 530), die ausgebildet ist, um eine Position und eine Lage der Strahlensendevorrichtung (110) sowie eine Position und eine Lage der Strahlendetektionsvorrichtung (130) zu bestimmen, ohne von der Strahlendetektionsvorrichtung (130) aufgenommene Durchstrahlungsbilder zu verwenden; und
einer Rechenvorrichtung (150; 610), die ausgebildet ist, um basierend auf den Durchstrahlungsbildern, die tiefenaufgelöste dreidimensionale Darstellung des Objekts zu erzeugen,
wobei die Rechenvorrichtung (150; 160) ausgebildet ist, um die bestimmten Positionen und Lagen bei der Erzeugung der tiefenaufgelösten dreidimensionalen Darstellung des Objekts zu berücksichtigen, und/oder wobei eine Positionierungsvorrichtung vorgesehen ist, die ausgebildet ist, um die Position und Lage der Strahlensendevorrichtung (110) und der Strahlendetektionsvorrichtung (130) relativ zueinander basierend auf den erfassten Positionen und Lagen auf eine für die Erzeugung der tiefenaufgelösten dreidimensionalen Darstellung des Objekts erforderliche Position und Lage einzustellen,
einer Haltevorrichtung (260; 270; 310; 400; 410; 430; 520; 630) für das erste Teilsystem (109) und einer Haltevorrichtung für das zweite Teilsystem (111), die jeweils ausgebildet sind, um das jeweilige Teilsystem (109, 111) relativ zu dem Objekt zu positionieren, wobei die Haltevorrichtungen ausgebildet sind, um das erste und zweite Teilsystem (109, 111) an dem Objekt anzubringen.

2. Vorrichtung gemäß Anspruch 1, bei der die Lokalisierungseinrichtung (119, 121, 140; 500; 504; 506; 512; 514; 516; 530) ausgebildet ist, um für die Strahlensendevorrichtung (110) und die Strahlendetektionsvorrichtung (130) jeweils Positionsvektoren und Richtungsvektoren im dreidimensionalen Raum relativ zu einem Bezugspunkt (118; 502; 512; 518) zu bestimmen.

3. Vorrichtung gemäß Anspruch 1 oder 2, die ferner eine Kalibrierungseinrichtung aufweist, die ausgebildet ist, um von der Strahlendetektionsvorrichtung aufgenommene Strahlungsbilder zu verwenden, um Abweichungen der Positionen und Lagen der Strahlensendevorrichtung (110) und der Strahlendetektionsvorrichtung (130) von den durch die Lokalisierungseinrichtung bestimmten Positionen und Lagen zu bestimmen, wobei die Rechenvorrichtung ausgebildet ist, um die Abweichungen bei der Erzeugung der tiefenaufgelösten dreidimensionalen Darstellung des Objekts zu berücksichtigen, und/oder wobei die Manipulationseinrichtung ausgebildet ist, um die Position und Lage der Strahlensendevorrichtung und der Strahlendetektionsvorrichtung relativ zueinander basierend auf den Abweichungen einzustellen.

4. Vorrichtung gemäß einem der Ansprüche 1 bis 3, bei der der Verlauf der ersten und/oder zweiten Bewegungsbahn einen Kreis mit einem vordefinierten Radius (316), einen Kreis mit einem variablen Radius (324) oder eine geradlinige Bewegung entlang einer ersten Richtung (336; 344) oder entlang einer zweiten Richtung (338; 342) aufweist.

5. Vorrichtung gemäß einem der Ansprüche 1 bis 4, bei der die jeweilige Haltevorrichtung einen Saugnapf, einen Magneten, einen adhäsiven Halter, einen Haken, eine Schraubverbindung oder eine Klebeverbindung aufweist.

6. Vorrichtung gemäß einem der Ansprüche 1 bis 5, wobei die jeweilige Haltevorrichtung zumindest drei Beine (214; 216; 218; 228; 232; 234; 236; 402; 404; 406; 408; 412; 414; 416) mit einstellbarer Länge aufweist.

7. Vorrichtung gemäß einem der Ansprüche 1 bis 6, die ferner die Positionierungsvorrichtung (420) aufweist, die ausgebildet ist, um die Position und die Lage des ersten und des zweiten Teilsystems relativ zueinander einzustellen, wobei die Positionierungsvorrichtung durch die Haltevorrichtungen gebildet ist.

8. Vorrichtung gemäß einem der vorhergehenden Ansprüche, wobei die Lokalisierungseinrichtung ausgebildet ist, um eine funkbasierte Lokalisierung, eine laserbasierte Lokalisierung oder eine Lokalisierung basierend auf einer Erfassung optischer Markierungen zu ermöglichen.

9. Vorrichtung gemäß einem der Ansprüche 1 bis 8, wobei die Rechenvorrichtung ausgebildet ist, um einen Verlauf für die Bewegungsbahn basierend auf den bestimmten relativen Positionen und Lagen zu bestimmen und diesen der ersten und/oder zweiten Manipulationseinrichtung bereitzustellen.

10. Vorrichtung gemäß einem der vorhergehenden Ansprüche, die eine Abtastvorrichtung (600) aufweist, die ausgebildet ist, um eine Oberfläche des Objekts (640) taktil, durch Radar, Ultraschall oder ein optisches Verfahren abzutasten, wobei die Rechenvorrichtung (610) ausgebildet ist, um eine Ausgabe der Abtastvorrichtung (600) bei der Erzeugung der tiefenaufgelösten dreidimensionalen Darstellung zu berücksichtigen.

11. Vorrichtung gemäß einem der vorhergehenden Ansprüche, wobei die Rechenvorrichtung ausgebildet ist, um eine Auswertung der erzeugten dreidimensionalen Darstellung hinsichtlich eines Defektes oder einer Fehlstelle, durch Vergleich mit gespeicherten Referenzdarstellungen, durchzuführen.

12. Vorrichtung gemäß einem der vorhergehenden Ansprüche, wobei das erste Teilsystem und das zweite Teilsystem (109, 111) nicht mechanisch miteinander verbunden sind.

13. Vorrichtung gemäß einem der vorhergehenden Ansprüche, die ferner einen Bewegungssensor aufweist, der ausgebildet ist, um Veränderungen der Positionen und Lagen der Strahlensendevorrichtung (110) und der Strahlendetektionsvorrichtung (130) zu bestimmen, wobei die Rechenvorrichtung ausgelegt ist, um die bestimmten Veränderungen bei der Erzeugung der Darstellung zu berücksichtigen.

14. Verfahren unter Verwendung der Vorrichtung eines der Ansprüche 1-13 zum Erzeugen einer tiefenaufgelösten dreidimensionalen Darstellung von einem zwischen einer Strahlensendevorrichtung (110) eines ersten Teilsystems (109) und einer Strahlendetektionsvorrichtung (130) eines zweiten Teilsystems (110) durchstrahlbar angeordneten Objekt, wobei die Strahlendetektionsvorrichtung (130) ausgebildet ist, um Durchstrahlungsbilder aufzunehmen, und wobei das erste Teilsystem (109) eine erste Manipulationseinrichtung (113) aufweist, die ausgebildet ist, um die Strahlensendevorrichtung (110) entlang einer ersten Bewegungsbahn (114) zu verfahren, und/oder das zweite Teilsystem (115) eine zweite Manipulationseinrichtung (115) aufweist, die ausgebildet ist, um die Strahlendetektionsvorrichtung (130) entlang einer zweiten Bewegungsbahn (116) zu verfahren, wodurch ein Aufnehmen von Durchstrahlungsbildern von dem Objekt (120) aus verschiedenen Perspektiven ermöglicht wird, und wobei das erste und das zweite Teilsystem (109, 111) unabhängig voneinander relativ zu dem Objekt (120) positionierbar sind, mit folgenden Schritten:
Positionieren des ersten Teilsystems (109) und des zweiten Teilsystems (111) relativ zu dem Objekt (120), um die Strahlensendevorrichtung (110) und die Strahlendetektionsvorrichtung (130) relativ zu dem Objekt (120) zu positionieren, wobei das Positionieren ein Anbringen des ersten und des zweiten Teilsystems an dem Objekt (10) mittels einer Haltevorrichtung (260; 270; 310; 400; 410; 430; 520; 630) für das erste Teilsystem (109) und einer Haltevorrichtung für das zweite Teilsystem (111) aufweist, die jeweils ausgebildet sind, um das erste und zweite Teilsystem (109, 111) an dem Objekt anzubringen;
Bestimmen einer Position und einer Lage der Strahlensendevorrichtung (110) sowie einer Position und einer Lage der Strahlendetektionsvorrichtung (130), ohne von der Strahlendetektionsvorrichtung (130) aufgenommene Durchstrahlungsbilder zu verwenden;
Aufnehmen von Durchstrahlungsbildern von dem Objekt (120) aus verschiedenen Perspektiven, während die Strahlensendevorrichtung (110) entlang des ersten Bewegungswegs (114) verfahren wird und/oder während die Strahlendetektionsvorrichtung (130) entlang des zweiten Bewegungswegs (116) verfahren wird; und Erzeugen der tiefenaufgelösten dreidimensionalen Darstellung des Objekts (120) basierend auf den Durchstrahlungsbildern,
wobei die bestimmten Positionen und Lagen bei der Erzeugung der tiefenaufgelösten dreidimensionalen Darstellung des Objekts (120) berücksichtigt werden und/oder wobei die Position und Lage der Strahlensendevorrichtung (110) und der Strahlendetektionsvorrichtung (130) relativ zueinander basierend auf den erfassten Positionen und Lagen auf eine für die Erzeugung der tiefenaufgelösten dreidimensionalen Darstellung des Objekts (120) erforderliche Position und Lage eingestellt wird.

## Claims

1. A device (100; 200) for generating a depth-resolved three-dimensional representation of an object (120; 230; 510; 640) arranged to be transmissive between a radiation transmission device (110; 220; 320) and a radiation detection device (130; 210; 340), comprising:
a first sub-system (109) comprising a radiation transmission device (110);
a second sub-system (111) comprising a radiation detection device (130), configured to take transmission pictures,
wherein the first sub-system (109) comprises first manipulation means (113) configured to move the radiation transmission device (110) along a first travel path (114), and/or wherein the second sub-system (111) comprises second manipulation means (115) configured to move the radiation detection device (130) along a second travel path (116), thereby allowing transmission pictures of the object (120) to be taken from different perspectives,
wherein the first sub-system (109) and the second sub-system (111) may be positioned relative to the object (120) in a mutually independent manner;
localization means (119, 121, 140; 500; 504; 506; 512; 514; 516; 530) configured to determine a position and location of the radiation transmission device (110) and a position and location of the radiation detection device (130) without using transmission pictures taken by the radiation detection device (130); and
a computing device (150; 610) configured to generate the depth-resolved three-dimensional representation of the object based on the transmission pictures,
wherein the computing device (150; 160) is configured to take into consideration the determined positions and locations when generating the depth-resolved three-dimensional representation of the object, and/or wherein a positioning device is provided, configured to adjust the position and location of the radiation transmission device (110) and the radiation detection device (130) relative to each other based on the detected positions and locations to a position and location required for generating the depth-resolved three-dimensional representation of the object,
a holding device (260; 270; 310; 400; 410; 430; 520; 630) for the first sub-system (109) and a holding device for the second sub-system (111), which are each configured to position the respective sub-system (109, 111) relative to the object, the holding devices being configured to attach the first and second sub-systems (109, 111) to the object.

2. The device in accordance with claim 1, wherein the localization means (119, 121, 140; 500; 504; 506; 512; 514; 516; 530) is configured to determine respective position vectors and direction vectors in the three-dimensional space relative to a reference point (118; 502; 512; 518) for the radiation transmission device (110) and the radiation detection device (130).

3. The device in accordance with claim 1 or claim 2, further comprising calibration means configured to use radiation pictures taken by the radiation detection device in order to determine deviations in positions and locations of the radiation transmission device (110) and the radiation detection device (130) from the positions and locations determined by the localization means, wherein the computing device is configured to take into consideration the deviations when generating the depth-resolved three-dimensional representation of the object, and/or wherein the manipulation means is configured to adjust the position and location of the radiation transmission device and the radiation detection device relative to each other based on the deviations.

4. The device in accordance with any of claims 1 to 3, wherein the course of the first and/or second travel paths comprises a circle having a predefined radius (316), a circle having a variable radius (324), or a rectilinear movement along a first direction (336; 344) or along a second direction (338; 342).

5. The device in accordance with any of claims 1 to 4, wherein the respective holding device comprises a sucking element, a magnet, an adhesive holder, a hook, a screw connection or glued connection.

6. The device in accordance with any of claims 1 to 5, wherein the respective holding device comprises at least three legs (214; 216; 218; 228; 232; 234; 236; 402; 404; 406; 408; 412; 414; 416) of adjustable length.

7. The device in accordance with any of claims 1 to 6, further comprising the positioning device (420) configured to adjust the position and location of the first and second sub-systems relative to each other, wherein the positioning device is formed by the holding devices.

8. The device in accordance with any of the preceding claims, wherein the localization means is configured to allow radio-based localization, laser-based localization or localization based on detecting optical marks.

9. The device in accordance with any of claims 1 to 8, wherein the computing device is configured to determine a course of the travel path based on the relative positions and locations determined and provide same to the first and/or second manipulation means.

10. The device in accordance with any of the preceding claims, comprising a scanning device (600) configured to scan a surface of the object (640) in a tactile manner, by means of radar, supersonic radiation or an optical method, wherein the computing device (610) is configured to take into consideration an output of the scanning device (600) when generating the depth-resolved three-dimensional representation.

11. The device in accordance with any of the preceding claims, wherein the computing device is configured to perform an evaluation of the three-dimensional representation generated with respect to a defect or a vacancy by means of comparison to reference representations stored.

12. The device in accordance with any of the preceding claims, wherein the first sub-system and the second sub-system (109, 111) are not connected to each other mechanically.

13. The device in accordance with any of the preceding claims, further comprising a movement sensor configured to determine changes in positions and locations of the radiation transmission device (110) and the radiation detection device (130), wherein the computing device is configured to take into consideration the determined changes when generating the representation.

14. A method, using the device of any of claims 1 to 13, for generating a depth-resolved three-dimensional representation of an object arranged to be transmissive between a radiation transmission device (110) of a first sub-system (109) and a radiation detection device (130) of a second sub-system (110), wherein the radiation detection device (130) is configured to take transmission pictures, and wherein the first sub-system (109) comprises first manipulation means (113) configured to move the radiation transmission device (110) along a first travel path (114), and/or the second sub-system (115) comprises second manipulation means (115) configured to move the radiation detection device (130) along a second travel path (116), thereby allowing taking transmission pictures of the object (120) from different perspectives, and wherein the first and second sub-systems (109, 111) may be positioned relative to the object (120) in a mutually independent manner, comprising the steps of:
positioning the first sub-system (109) and the second sub-system (111) relative to the object (120) in order to position the radiation transmission device (110) and the radiation detection device (130) relative to the object (120), wherein positioning comprises attaching the first and second sub-systems to the object (10) by means of a holding device (260; 270; 310; 400; 410; 430; 520; 630) for the first sub-system (109) and a holding device for the second sub-system (111), which are each configured to attach the first and second sub-systems (109, 111) to the object;
determining a position and location of the radiation transmission device (110) and a position and location of the radiation detection device (130) without using transmission pictures taken by the radiation detection device (130);
taking transmission pictures of the object (120) from different perspectives, while the radiation transmission device (110) is moved along the first travel path (114) and/or while the radiation detection device (130) is moved along the second travel path (116); and
generating the depth-resolved three-dimensional representation of the object (120) based on the transmission pictures,
wherein the positions and locations determined are taken into consideration when generating the depth-resolved three-dimensional representation of the object (120), and/or wherein the position and location of the radiation transmission device (110) and the radiation detection device (130) are adjusted relative to each other based on the detected positions and locations to a position and location required for generating the depth-resolved three-dimensional representation of the object (120).

## Revendications

1. Dispositif (100; 200) pour générer une représentation tridimensionnelle à résolution en profondeur d'un objet (120; 230; 510; 640) disposé de manière irradiable entre un dispositif de transmission de rayons (110; 220; 320) et un dispositif de détection de rayons (130; 210; 340), aux caractéristiques suivantes:
un premier système partiel (109) présentant un dispositif de transmission de rayons (110);
un deuxième système partiel (111) présentant un dispositif de détection de rayons (130) qui est conçu pour prendre des images de radiographie,
dans lequel le premier système partiel (109) présente un premier moyen de manipulation (113) qui est conçu pour déplacer le dispositif de transmission de rayons (110) le long d'un premier trajet de déplacement (114), et/ou dans lequel le deuxième système partiel (111) présente un deuxième moyen de manipulation (115) qui est conçu pour déplacer le dispositif de détection de rayons (130) le long d'un deuxième trajet de déplacement (116), d'où est permise la prise d'images de radiographie de l'objet (120) sous différents angles,
dans lequel le premier système partiel (109) et le deuxième système partiel (111) peuvent être positionnés indépendamment l'un de l'autre par rapport à l'objet (120);
un moyen de localisation (119, 121, 140; 500; 504; 506; 512; 514; 516; 530) qui est conçu pour déterminer une position et un emplacement du dispositif de transmission de rayons (110) ainsi qu'une position et un emplacement du dispositif de détection de rayons (130) sans utiliser des images de radiographie prises par le dispositif de détection de rayons (130); et
un dispositif de calcul (150; 610) qui est conçu pour générer, sur base des images de radiographie, la représentation tridimensionnelle à résolution en profondeur de l'objet,
dans lequel le dispositif de calcul (150; 160) est conçu pour tenir compte des positions et emplacements déterminés lors de la génération de la représentation tridimensionnelle à résolution en profondeur de l'objet, et/ou dans lequel est prévu un dispositif de positionnement qui est conçu pour régler la position et l'emplacement du dispositif de transmission de rayons (110) et du dispositif de détection de rayons (130) l'un par rapport à l'autre sur base des positions et emplacements détectés à une position et un emplacement requis pour la génération de la représentation tridimensionnelle à résolution en profondeur de l'objet,
un dispositif de maintien (260; 270; 310; 400; 410; 430; 520; 630) pour le premier système partiel (109) et un dispositif de maintien pour le deuxième système partiel (111) qui sont conçus, chacun, pour positionner le système partiel respectif (109, 111) par rapport à l'objet, où les dispositifs de maintien sont conçus pour placer le premier et le deuxième système partiel (109, 111) sur l'objet.

2. Dispositif selon la revendication 1, dans lequel le moyen de localisation (119, 121, 140; 500; 504; 506; 512; 514; 516; 530) est conçu pour déterminer, pour le dispositif de transmission de rayons (110) et le dispositif de détection de rayons (130) respectivement des vecteurs de position et des vecteurs de direction dans l'espace tridimensionnel par rapport à un point de référence (118; 502; 512; 518).

3. Dispositif selon la revendication 1 ou 2, présentant par ailleurs un moyen d'étalonnage qui est conçu pour utiliser les images de radiographie prises par le dispositif de détection de rayons pour déterminer des écarts des positions et emplacements du dispositif de transmission de rayons (110) et du dispositif de détection de rayons (130) par rapport aux positions et emplacements déterminés par le dispositif de localisation, dans lequel le dispositif de calcul est conçu pour tenir compte des écarts lors de la génération de la représentation tridimensionnelle à résolution en profondeur de l'objet, et/ou dans lequel le moyen de manipulation est conçu pour régler la position et l'emplacement du dispositif de transmission de rayons et du dispositif de détection de rayons l'un par rapport à l'autre sur base des écarts.

4. Dispositif selon l'une des revendications 1 à 3, dans lequel la première et/ou deuxième trajectoire de déplacement présente un cercle de rayon prédéfini (316), un cercle de rayon variable (324) ou un déplacement rectiligne dans une première direction 336; 344) ou dans une deuxième direction (338; 342).

5. Dispositif selon l'une des revendications 1 à 4, dans lequel le dispositif de maintien respectif présente une ventouse, un aimant, un support adhésif, un crochet, un raccord à vis ou un raccord adhésif.

6. Dispositif selon l'une des revendications 1 à 5, dans lequel le dispositif de maintien respectif présente au moins trois pattes (214; 216; 218; 228; 232; 234; 236; 402; 404; 406; 408; 412; 414; 416) de longueur réglable.

7. Dispositif selon l'une des revendications 1 à 6, présentant par ailleurs le dispositif de positionnement (420) qui est conçu pour régler la position et l'emplacement du premier et du deuxième système partiel l'un par rapport à l'autre, le dispositif de positionnement étant constitué par les dispositifs de maintien.

8. Dispositif selon l'une des revendications précédentes, dans lequel le moyen de localisation est conçu pour permettre une localisation par ondes radio, une localisation à base de technologie laser ou une localisation à base d'une détection de repères optiques.

9. Dispositif selon l'une des revendications 1 à 8, dans lequel le dispositif de calcul est conçu pour déterminer une trajectoire pour le trajet de déplacement sur base des positions et emplacements relatifs déterminés et pour la mettre à disposition du premier et/ou du deuxième moyen de manipulation.

10. Dispositif selon l'une des revendications précédentes, présentant un dispositif de balayage (600) qui est conçu pour balayer une surface de l'objet (640) de manière tactile, par radar, par ultrasons ou par un procédé optique, dans lequel le dispositif de calcul (610) est conçu pour tenir compte d'une sortie du dispositif de balayage (600) lors de la génération de la représentation tridimensionnelle à résolution en profondeur.

11. Dispositif selon l'une des revendications précédentes, dans lequel le dispositif de calcul est conçu pour effectuer une évaluation de la représentation tridimensionnelle générée quant à un défaut ou une position défectueuse, par comparaison avec les représentations de référence mémorisées.

12. Dispositif selon l'une des revendications précédentes, dans lequel le premier système partiel et le deuxième système partiel (109, 111) ne sont pas connectés mécaniquement l'un à l'autre.

13. Dispositif selon l'une des revendications précédentes, présentant par ailleurs un capteur de mouvement qui est conçu pour déterminer les changements de position et d'emplacement du dispositif de transmission de rayons (110) et du dispositif de détection de rayons (130), dans lequel le dispositif de calcul est conçu pour tenir compte des changements détectés lors de la génération de la représentation.

14. Procédé, à l'aide du dispositif selon l'une des revendications 1 à 13 pour générer une représentation tridimensionnelle à résolution en profondeur d'un objet disposé de manière irradiable entre un dispositif de transmission de rayons (110) d'un premier système partiel (109) et un dispositif de détection de rayons (130) d'un deuxième système partiel (110), dans lequel le dispositif de détection de rayons (130) est conçu pour prendre des images de radiographie, et dans lequel le premier système partiel (109) présente un premier moyen de manipulation (113) qui est conçu pour déplacer le dispositif de transmission de rayons (110) le long d'un premier trajet de déplacement (114), et/ou dans lequel le deuxième système partiel (115) présente un deuxième moyen de manipulation (115) qui est conçu pour déplacer le dispositif de détection de rayons (130) le long d'un deuxième trajet de déplacement (116), d'où est permise une prise d'images de radiographie de l'objet (120) sous différents angles, et dans lequel le premier et le deuxième système partiel (109, 111) peuvent être positionnés indépendamment l'un de l'autre par rapport à l'objet (120), aux étapes suivantes consistant à:
positionner le premier système partiel (109) et le deuxième système partiel (111) par rapport à l'objet (120), pour positionner le dispositif de transmission de rayons (110) et le dispositif de détection de rayons (130) par rapport à l'objet (120), le positionnement présentant le placement du premier et du deuxième système partiel sur l'objet (10) au moyen d'un dispositif de maintien (260; 270; 310; 400; 410; 430; 520; 630) pour le premier système partiel (109) et d'un dispositif de maintien pour le deuxième système partiel (111) qui sont conçus, chacun, pour placer le premier et le deuxième système partiel (109, 111) sur l'objet;
déterminer une position et un emplacement du dispositif de transmission de rayons (110) et une position et un emplacement du dispositif de détection de rayons (130) sans utiliser les images de radiographie prises par le dispositif de détection de rayons (130);
prendre des images de radiographie de l'objet (120) sous différents angles tandis que le dispositif de transmission de rayons (110) est déplacé le long du premier trajet de déplacement (114) et/ou tandis que le dispositif de détection de rayons (130) est déplacé le long du deuxième trajet de déplacement (116); et
générer la représentation tridimensionnelle à résolution en profondeur de l'objet (120) sur base des images de radiographie,
dans lequel sont pris en compte les positions et emplacements déterminés lors de la génération de la représentation tridimensionnelle à résolution en profondeur de l'objet (120) et/ou dans lequel la position et l'emplacement du dispositif de transmission de rayons (110) et du dispositif de détection de rayons (130) l'un par rapport à l'autre sont réglés, sur base des positions et emplacements détectés, à une position et un emplacement requis pour la génération de la représentation tridimensionnelle à résolution en profondeur de l'objet (120).
